# FASCICULE DE BREVET EUROPEEN

(11) **EP 4 562 808 B1**
(45) Date de publication et mention de la délivrance du brevet: **21.10.2026**
(21) Numéro de dépôt: 23745555.5
(22) Date de dépôt: 27.07.2023
(51) Int. Cl.: H04L 9/08

(54) **PROCÉDÉS DE DISTRIBUTION QUANTIQUE ET DISPOSITIFS DE TÉLÉCOMMUNICATION ASSOCIÉS**
QUANTENVERTEILUNGSVERFAHREN UND ZUGEHÖRIGE TELEKOMMUNIKATIONSGERÄTE
QUANTUM DISTRIBUTION PROCESSES AND ASSOCIATED TELECOMMUNICATION DEVICES

(30) Priorité: 28.07.2022 FR 2207760
(43) Date de publication de la demande: 04.06.2025
(73) Titulaire: THALES, 92190 Meudon (FR)
(72) Inventeur: OSTER, Yann, 31037 TOULOUSE Cedex (FR)
(74) Mandataire: Atout PI Laplace
(86) Numéro de dépôt international: PCT/EP2023/070872
(87) Numéro de publication internationale: WO 2024/023234

(56) Documents cités:
- WO-A1-2014/065497
- CN-A- 111 510 286
- MEHIC MIRALEM ET AL: "Error Reconciliation in Quantum Key Distribution Protocols", 12 May 2020, 16TH EUROPEAN CONFERENCE - COMPUTER VISION - ECCV 2020, PAGE(S) 222 - 236, XP047551286
- KIM GYUSANG ET AL: "Side Channel Vulnerability in Parity Computation of Generic Key Reconciliation Process on QKD", 2021 INTERNATIONAL CONFERENCE ON INFORMATION AND COMMUNICATION TECHNOLOGY CONVERGENCE (ICTC), IEEE, 20 October 2021 (2021-10-20), pages 257 - 261, XP034038897, DOI: 10.1109/ICTC52510.2021.9620820
- FERNANDO MICHELLE ET AL: "Reed Solomon Codes for the Reconciliation of Wireless PHY Layer Based Secret Keys", 2017 IEEE 86TH VEHICULAR TECHNOLOGY CONFERENCE (VTC-FALL), IEEE, 24 September 2017 (2017-09-24), pages 1 - 6, XP033319820, DOI: 10.1109/VTCFALL.2017.8288218
- KIKTENKO E O ET AL: "Symmetric blind information reconciliation for quantum key distribution", ARXIV.ORG, CORNELL UNIVERSITY LIBRARY, 201 OLIN LIBRARY CORNELL UNIVERSITY ITHACA, NY 14853, 12 December 2016 (2016-12-12), XP081362112, DOI: 10.1103/PHYSREVAPPLIED.8.044017
- HAO-KUN MAO ET AL: "A novel approach to reducing information leakage for quantum key distribution", ARXIV.ORG, CORNELL UNIVERSITY LIBRARY, 201 OLIN LIBRARY CORNELL UNIVERSITY ITHACA, NY 14853, 21 November 2021 (2021-11-21), XP091088137
- SUGIMOTO T ET AL: "A STUDY ON SECTRET KEY RECONCILIATION PROTOCOL "CASCADE"", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E83-A, no. 10, 1 October 2000 (2000-10-01), pages 1987 - 1991, XP000975375, ISSN: 0916-8508

## Description

### Domaine technique :

L'invention se situe dans le domaine de la génération et du partage de clé secrète symétrique entre deux dispositifs de télécommunication distants associés à leurs utilisateurs respectifs appelés ci-dessous Alice et Bob : Alice et Bob doivent utiliser une clé rigoureusement identique pour pouvoir chiffrer/déchiffrer leurs messages. L'invention concerne plus particulièrement la distribution de clé quantique (QKD) et la communication sous-jacente d'informations de type parités.

### Technique antérieure :

La cryptographie quantique repose sur la transmission de qubits (quantum bits) ou d'états cohérents générés aléatoirement, pour élaborer et distribuer des clés secrètes utilisables par des protocoles de chiffrement classiques tels que le chiffrement à masque jetable (One Time Pad). Depuis le premier protocole proposé en 1984 (BB84), de multiples protocoles de QKD ont été définis. On distingue les protocoles à variables discrètes (qubits, DV-QKD) et ceux à variables continues (CV-QKD). Certains protocoles (BB84, DV-QKD) reposent sur les choix aléatoires d'une base de génération et de mesure, et impliquent la communication de ces choix de bases. D'autres protocoles (CV-QKD avec récepteur hétérodyne) n'impliquent pas de communications sur le choix d'une base de mesure. Certains protocoles basés sur l'intrication de photons impliquent une source de photons externe à Alice et Bob. Mais tous les protocoles QKD intègrent une étape de correction des erreurs résiduelles pour élaborer une clé partagée entre Alice et Bob, mettant en œuvre la communication de bits de parités, pour diverses techniques de détection ou de correction d'erreurs (codes FEC (Forward Error Correction code) tels que LDPC (Low Density Parity Code), protocoles interactifs et itératifs tels que Cascade ou Winnow, etc). A des fins d'illustration, par la suite nous ferons référence au protocole BB84.

Lors d'un protocole de cryptographie quantique, les deux interlocuteurs distants Alice et Bob disposent :
- d'objets quantiques, c'est-à-dire d'objets physiques qui se comportent selon les lois de la physique quantique ; en pratique, ces objets sont des impulsions lumineuses (des photons), qui peuvent prendre plusieurs formes : photons uniques, états cohérents, paires de photons intriqués, etc. ; le photon, autorise l'encodage de l'information sur des variables observables telles que la polarisation de la lumière, sa fréquence, sa phase etc. ;
- d'un canal quantique, qui permet le transit des impulsions lumineuses ;
- d'un canal classique (dit aussi canal public) de communication (typiquement Internet, hertzien, transmission optique sur fibre ou en espace libre).

La distribution de clé quantique, Quantum Key Distribution (QKD), est une technique exploitant des propriétés quantiques pour garantir un caractère aléatoire permettant de détecter l'interception et la ré-émission par un tiers malveillant, appelons-le Eve (Eavesdropper), d'un message initial généré par Alice à destination de Bob. Dans la mesure où il est impossible de cloner une information quantique inconnue sans qu'elle soit détruite, ou de mesurer un état quantique inconnu sans le modifier, la lecture des qubits lors de leur transmission entre deux interlocuteurs souhaitant chiffrer leurs communications avec une clé secrète issue de ces qubits par un intrus peut être immédiatement détectée : une interception sera immédiatement détectée par Alice et Bob, qui renonceront à cette clé.

Une technique QKD de référence est le protocole BB84 publié par C. Bennett et G. Brassard en 1984 et utilisant des variables discrètes : des qbuits. Un qubit prend une valeur 0 ou 1, et est représenté par la polarisation d'un unique photon, sur deux quadratures (bases) possibles : H/V ou D/A (la majuscule H, V, D, A indique le type de polarisation : H pour horizontale, V pour verticale, D pour diagonale et A pour Antidiagonale). Les étapes sont alors classiquement les suivantes.

Les grandes étapes de la distribution de clé quantique sont les suivantes :
- Alice génère une séquence de bits aléatoires et code chaque bit sur chaque impulsion lumineuse, puis l'émet vers Bob par le canal quantique.
- Celui-ci mesure alors l'information que porte l'impulsion qu'il a reçue.
- Alice et Bob évaluent un niveau d'interception des informations échangées sur le canal quantique en fonction des différences entre les données émises et celles mesurées et si le niveau est supérieur à un seuil fixé, il est mis fin à l'opération de distribution quantique.
- Si non, l'extraction de la clé secrète à partir des données corrélées est réalisée via une étape dite de réconciliation des données : dans cette étape de réconciliation, une chaîne de bits partagée par Alice et Bob est déterminée à partir des données corrélées et d'un algorithme de correction d'erreurs mettant en œuvre des bits de parité.
- Une étape d'amplification du secret est généralement mise en œuvre pour neutraliser la fuite d'information lors de la réconciliation.

Pour chaque qubit (0/1) d'une série de qubits générés aléatoirement par Alice, cette dernière génère sur le canal quantique un photon dont la polarisation dépend du choix, aléatoire, d'une quadrature (H/V ou D/A) et de la valeur binaire considérée (0/1).

A l'autre bout du canal quantique, côté réception, Bob sélectionne aléatoirement, pour chaque qubit, une quadrature pour réaliser la détection (soit sur H/V, soit sur D/A). Tout qubit mesuré sur une même quadrature que la quadrature utilisée à l'émission est normalement correctement transmis : 100% à ε près. (typiquement la valeur de ε est dans la plage [0 ; 10%]. Lorsque les quadratures Tx/Rx ne sont pas identiques, la transmission est fausse avec une probabilité de 50% à ε près.

Après la transmission, Bob possède donc un ensemble de mesures qui sont corrélées aux données envoyées par Alice, mais qui ont pu être espionnées par Eve.

Puis a lieu la phase dite de réconciliation n'utilisant que le canal de communication classique, où :
- une étape dite de sifting sélectionne les qubits transmis pour lesquels Alice et Bob utilisent une même quadrature de génération et de détection : pour ce faire, Alice et Bob communiquent en clair sur le canal classique pour diffuser les quadratures utilisées ; ceci permet d'élaborer deux versions d'une clé dite « sifted key» respectivement du côté d'Alice et de Bob, en écartant en moyenne 50% des qubits (quadratures Tx/Rx différentes) ;
- il est réalisé une estimation du taux d'erreur, pour déterminer la présence éventuelle d'Eve (cas de rejet de la clé), et pour sélectionner un code correcteur d'erreur (choix du code et du rendement) ou pour paramétrer un protocole interactif et itératif de correction d'erreur par requête/réponse pour la suite du traitement ;
- une étape de détection et correction des erreurs résiduelles comprenant des échanges de bits de parité calculés par Alice et/ou Bob sur leur clé « sifted key» respective a ensuite lieu (protocole Cascade ou Winnow, code correcteur d'erreur FEC LDPC...), à la suite de laquelle Alice et Bob partagent une clé rigoureusement identique, pour laquelle Eve dispose d'une certaine information.

Alice et Bob partagent alors une clé secrète (après une étape additionnelle d'amplification du secret).

La diffusion sur le canal public des informations partagées entre Alice et Bob (« side information ») concernant les valeurs des bits de parités, lors de la phase de réconciliation, constitue une fuite d'information préjudiciable susceptible de favoriser Eve dans sa recherche de la clé. Cette divulgation va à l'encontre du secret de la clé, et nécessite un traitement d'amplification du secret, au prix d'une réduction de la taille de la clé.

En effet, sachant le choix des bases utilisées pour chaque qubit, Eve sait quels qubits sont fiables (à 1-ε près) parmi ceux qu'elle a mesurés. A partir des qubits fiables, et sachant les valeurs (fiables) de parité et la méthode de correction des erreurs résiduelles, Eve peut déduire des valeurs d'autres qubits, soit en terme de valeur soit en terme de probabilité. Dans tous les cas, cette information diffusée sur le canal public permet de réduire la combinatoire d'exploration de la clé pour Eve.

MEHIC MIRALEM ET AL: "Error Reconciliation 1-10 in Quantum Key Distribution Protocols", 12 mai 2020 (2020-05-12) ' 16TH EUROPEAN CONFERENCE - COMPUTER VISION - ECCV 2020, PAGE (S) 222 - 236, est relatif à la réconciliation d'erreur dans les protocoles QKD.

KIM GYUSANG ET AL: "Side Channel Vulnerability in Parity Computation of Generic Key Reconciliation Process on QKD", 2021 INTERNATIONAL CONFERENCE ON INFORMATION AND COMMUNICATION TECHNOLOGY CONVERGENCE (ICTC), IEEE, 20 octobre 2021, pages 257-261, traite de la vulnérabilité de canal auxiliaire dans le calcul de parité du processus de rapprochement de clés génériques en QKD.

WO 2014/065497 A1 est relatif à une méthode de permutation pour la correction d'erreur de bit dans le protocole QKD.

CN 111 510 286 A divulgue une méthode de négociation de code d'erreur d'un système QKD.

FERNANDO MICHELLE ET AL: "Reed Solomon Codes for the Reconciliation of Wireless PHY Layer Based Secret Keys", 2017 IEEE 86TH VEHICULAR TECHNOLOGYCONFERENCE (VTC-FALL), IEEE, 24 septembre 2017, pages 1-6, décrit des codes Reed Solomon pour la réconciliation des clés secrètes basées sur la couche PHY sans fil.

KIKTENKO E 0 ET AL: "Symmetric blind information reconciliation for quantum key distribution", ARXIV.ORG, CORNELL UNIVERSITY LIBRARY, 201OLIN LIBRARY CORNELL UNIVERSITY ITHACA, NY 14853, 12 décembre 2016 est relative la réconciliation d'information aveugle symétrique pour la distribution de clés quantiques.

HAO-KUN MAO ET AL: "A novel approach to reducing information leakage for quantum key", ARXIV.ORG, CORNELL UNIVERSITY LIBRARY, 201 OLIN LIBRARY CORNELL UNIVERSITY ITHACA, NY 4853, 21 novembre 2021, décrit une nouvelle approche pour réduire les fuites d'informations pour les clés quantiques.

SUGIMOTO T ET AL: "A STUDY ON SECRET KEY RECONCILIATION PROTOCOL "CASCADE"", IEICE TRANSACTIONS ON FUNDAMENTALS OF ELECTRONICS, COMMUNICATIONS AND COMPUTER SCIENCES, ENGINEERING SCIENCES SOCIETY,TOKYO, JP, vol. E83-A, no. 10, 1 octobre 2000, pages 1987-1991, propose une étude sur le protocole de réconciliation de clé secrète « CASCADE ».

Il est donc besoin d'une solution de distribution de clé quantique permettant de mieux préserver le secret et de diminuer le risque de fuite d'information sur le canal public.

### Résumé de l'invention :

A cet effet, suivant un premier aspect, la présente invention décrit un procédé de distribution quantique de clé entre un premier et un deuxième dispositifs de télécommunication (reliés par une première et une deuxième liaisons de télécommunication,
ladite première liaison étant une liaison de transmission optique et étant nommée ci-après canal quantique, ladite deuxième liaison de télétransmission étant nommé ci-après canal classique ;
ledit procédé comprenant les étapes suivantes mises en œuvre par le premier dispositif :
   - génération d'une séquence aléatoire de bits par le premier dispositif ;
   - pour chaque bit considéré successivement dans la séquence générée, codage dudit bit au moins par une valeur d'un paramètre définissant un état quantique d'une impulsion lumineuse respective comprenant au moins un photon, ladite valeur du paramètre étant déterminée en fonction d'au moins la valeur dudit bit ; une impulsion lumineuse présentant ladite valeur de paramètre étant ensuite émise sur le canal quantique et à destination du deuxième dispositif suite audit codage ;
   - au moins une étape parmi les étapes j et jj ci-dessous :
      - (j) une étape j comportant au moins
      - un calcul de bits de parité en fonction de bits de la séquence générée ; et
      - une transmission, à destination du deuxième dispositif, d'informations relatives aux bits de parité calculés ;
      - (jj) une étape jj comportant au moins :
         - une réception d'informations en provenance du deuxième dispositif et relatives à des bits de parité calculés par ledit deuxième dispositif en fonction de la réception, par le deuxième dispositif, des impulsions lumineuses émises par le premier dispositif ; puis
         - une détection d'erreurs dans ladite séquence de bits en fonction des valeurs desdites informations relatives aux bits de parité reçues ;
ledit procédé étant caractérisé en ce que les étapes suivantes sont en outre mises en œuvre par le premier dispositif :
   - répartition d'au moins certains des bits de la séquence générée en 3 ensembles de bits distincts, chaque bit étant associé à un numéro d'index fonction de son rang au sein d'au moins lesdits certains bits : un premier ensemble de bits pour définir la clef secrète, un deuxième ensemble de bits égaux à 0 et un troisième ensemble de bits égaux à 1 ; chaque bit d'au moins les deuxième et troisième ensembles étant associé, dans une mémoire du premier dispositif, à son numéro d'index ;
   - si l'étape (j) est mise en œuvre, ladite étape (j) comporte les étapes suivantes :
      (j0) les bits de parité sont calculés en fonction de bits du premier ensemble ;
      (j1) selon un code prédéterminé, codage de la valeur de chaque bit de parité calculé par une suite de bits b1 b2...bn de longueur n supérieure ou égale à 1 ;
      (j2) pour chaque bit bi, i = 1 à n : si et seulement si bi = 0, sélection d'un des bits du deuxième ensemble et si et seulement si bi = 1, sélection d'un des bits du troisième ensemble ;
      (j3) ladite transmission d'informations relatives aux bits de parité calculés comprend la transmission, sur le canal classique, pour chaque bit de parité calculé, d'une suite ind1 ind2 ...indn où indi, i=1 à n, indique le numéro d'index associé audit bit sélectionné dans le deuxième ou troisième ensemble à l'étape j2 pour le bit bi ;
   - si l'étape (jj) est mise en œuvre, ladite étape (jj) comporte les étapes suivantes :
      (jj0) les informations reçues en provenance du deuxième dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : détermination de la valeur du bit bi associé, dans la mémoire du premier dispositif, au numéro d'index indi pour i = 1 à n, et décodage selon un code déterminé, de la valeur de chaque bit de parité en fonction de la suite de bits b1 b2... bn déterminée pour ledit bit de parité ;
      (jj1) ladite détection d'erreurs est une détection d'erreurs dans le premier ensemble de bits pour définir la clé secrète et est effectuée en fonction des dites valeurs des bits de parité ainsi décodées.

La solution proposée réduit fortement la fuite d'information et améliore le secret : les valeurs des bits de parité pour la détection/correction des erreurs résiduelles ne sont pas transmises sur le canal public. Cette information est transmise indirectement et en deux temps : en transmettant un signal aléatoire de qubits sur le canal quantique, puis après sifting, en transmettant les numéros d'index des qubits de parité sur le canal public. Donc pour connaître les valeurs des bits de parité, il est nécessaire de disposer des qbits et de leur numéro d'index, la moitié des valeurs de qubits restant inaccessibles pour Eve.

Dans des modes de réalisation, un tel procédé comprendra en outre l'une au moins des caractéristiques suivantes :
- le procédé de distribution quantique de clé comprend au moins, pour l'étape j, l'une des dispositions parmi :
   si la valeur de bi est 0, l'information transmise relative à bi indique le numéro d'index du bit sélectionné du deuxième ensemble et si la valeur de bi est 1, l'information transmise relative audit bit indique ainsi le numéro d'index du bit sélectionné du troisième ensemble ; ladite sélection étant effectuée par tirage ;
- le premier dispositif comporte au moins deux bases distinctes de codage entre des valeurs dudit paramètre et les valeurs 0 ou 1 d'un bit ; et le premier dispositif sélectionne aléatoirement, pour chaque bit considéré dans la séquence générée, une base parmi les au moins deux bases distinctes, pour effectuer ledit codage de bit par ladite valeur dudit paramètre d'impulsion lumineuse et stocke, pour chaque bit de la séquence, une indication de la base sélectionnée ;

après l'étape d'émission, transmission par le premier dispositif au deuxième dispositif sur le canal classique de l'indication de la base que le premier dispositif a sélectionnée pour chaque bit de la séquence et réception en provenance dudit deuxième dispositif, sur le canal classique, de l'indication, pour chaque bit de la séquence, de la base que ledit deuxième dispositif a sélectionnée pour évaluer la valeur dudit bit de la séquence ;
comparaison, pour chaque bit de la séquence, des indications de base stockée et reçue et identification des bits de la séquence pour lequel la base sélectionnée par le premier dispositif et le deuxième dispositif sont identiques ;
les premier, deuxième et troisième ensembles de bits sont composés de bits ainsi identifiés.

Suivant un autre aspect, l'invention décrit un programme d'ordinateur destiné à être stocké dans la mémoire d'un premier dispositif et comprenant en outre un microcalculateur, ledit programme d'ordinateur comprenant des instructions qui, lorsqu'elles sont exécutées sur le microcalculateur, orchestrent les étapes d'un procédé selon le premier aspect de l'invention.

Suivant un autre aspect, l'invention décrit un dispositif de télécommunication étant adapté pour être relié à un autre dispositif de télécommunication par une première et une deuxième liaisons de télécommunication,
ladite première liaison étant une liaison de transmission optique et étant nommée ci-après canal quantique, ladite deuxième liaison de télétransmission étant nommé ci-après canal classique;
ledit dispositif étant adapté pour générer une séquence aléatoire de bits et pour chaque bit considéré successivement dans la séquence générée, pour coder ledit bit au moins par une valeur d'un paramètre définissant un état quantique d'une impulsion lumineuse respective comprenant au moins un photon, ladite valeur du paramètre étant déterminée en fonction d'au moins la valeur dudit bit, et pour émettre, sur le canal quantique et à destination de l'autre dispositif, une impulsion lumineuse présentant ladite valeur de paramètre ;
ledit dispositif étant adapté pour effectuer au moins une opération parmi les opérations j et jj ci-dessous :
   - (j) une opération j comportant au moins
   - un calcul de bits de parité en fonction de bits de la séquence générée ; et
   - une transmission, à destination de l'autre dispositif, d'informations relatives aux bits de parité calculés ;
   - (jj) une opération jj comportant au moins :
      - une réception d'informations en provenance de l'autre dispositif et relatives à des bits de parité calculés par ledit autre dispositif en fonction de la réception, par l'autre dispositif, des impulsions lumineuses émises par le dispositif ; puis
      - une détection d'erreurs dans ladite séquence de bits en fonction des valeurs desdites informations relatives aux bits de parité reçues ;
ledit dispositif étant caractérisé en ce qu'il est adapté pour répartir au moins certains des bits de la séquence générée en 3 ensembles de bits distincts, chaque bit étant associé à un numéro d'index fonction de son rang au sein d'au moins lesdits certains bits : un premier ensemble de bits pour définir la clef secrète, un deuxième ensemble de bits égaux à 0 et un troisième ensemble de bits égaux à 1 ; chaque bit d'au moins les deuxième et troisième ensembles étant associé, dans une mémoire du dispositif, à son numéro d'index ;
   - si le dispositif effectue l'opération (j), le dispositif est adapté pour, lors de ladite opération :
      (j0) calculer les bits de parité en fonction de bits du premier ensemble ;
      (j1) coder, selon un code prédéterminé, la valeur de chaque bit de parité calculé par une suite de bits b1 b2...bn de longueur n supérieure ou égale à 1 ;
      (j2) pour chaque bit bi, i = 1 à n : si et seulement si bi = 0, sélectionner un des bits du deuxième ensemble et si et seulement si bi = 1, sélectionner un des bits du troisième ensemble ;
      (j3) pour transmettre les informations relatives aux bits de parité calculés : transmettre, sur le canal classique, pour chaque bit de parité calculé, une suite ind1 ind2 ...indn où indi, i=1 à n, indique le numéro d'index associé audit bit sélectionné dans le deuxième ou troisième ensemble à l'étape j2 pour le bit bi ; et/ou
   - si le dispositif effectue l'opération (jj), le dispositif est adapté pour, lors de ladite opération :
      (jj0) les informations reçues en provenance de l'autre dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : déterminer la valeur du bit bi associé, dans la mémoire du dispositif, au numéro d'index indi pour i = 1 à n, et décoder selon un code déterminé, la valeur de chaque bit de parité en fonction de la suite de bits b1 b2...bn déterminée pour ledit bit de parité ;
      (jj1) effectuer, en fonction des dites valeurs des bits de parité ainsi décodées, ladite détection d'erreurs dans le premier ensemble de bits pour définir la clé secrète.

Suivant un autre aspect, l'invention décrit un procédé de distribution quantique de clé vis-à-vis d'un premier et un deuxième dispositifs de télécommunication reliés chacun à une première liaison de télécommunication respective et reliés entre eux par une deuxième liaison de télécommunication,
ladite première liaison étant une liaison de transmission optique et étant nommée ci-après canal quantique, ladite deuxième liaison de télétransmission étant nommé ci-après canal classique ;
ledit procédé comprenant les étapes suivantes mises en œuvre par le deuxième dispositif :
   - réception d'une séquence d'impulsions lumineuses sur le canal quantique telle que pour chaque impulsion lumineuse de la séquence d'impulsions reçue, une mesure d'un paramètre de l'impulsion lumineuse est effectuée ;
   - pour chaque impulsion lumineuse, estimation de la valeur d'au moins un bit codé par ladite impulsion en fonction de ladite mesure du paramètre ; les bits estimés en fonction des impulsions lumineuses de la séquence définissant une séquence de bits ;
   - au moins une étape parmi les étapes j et jj ci-dessous :
      - (j) une étape j comportant au moins :
      - un calcul de bits de parité en fonction de bits de ladite séquence ; et
      - une transmission, à destination du premier dispositif, d'informations relatives aux bits de parité calculés ;
(jj) une étape jj comportant au moins :
   - une réception d'informations en provenance du premier dispositif et relatives à des bits de parité calculés par ledit premier dispositif en fonction d'au moins de bits correspondant à la séquence de bits ; puis
   - une détection d'erreurs dans la séquence de bits en fonction des informations reçues relatives aux bits de parité ;
ledit procédé étant caractérisé en ce que les étapes suivantes sont en outre mises en œuvre par le deuxième dispositif :
   - répartition d'au moins certains des bits de la séquence en 3 ensembles de bits distincts, chaque bit étant associé à un numéro d'index fonction de son rang au sein au moins desdits certains bits : un premier ensemble de bits pour définir la clef secrète, un deuxième ensemble de bits égaux à 0 et un troisième ensemble de bits égaux à 1 ; chaque bit d'au moins les deuxième et troisième ensembles étant associé, dans une mémoire du deuxième dispositif, à son numéro d'index ;
   - si l'étape (j) est mise en œuvre, ladite étape (j) comporte les étapes suivantes :
      (j0) les bits de parité sont calculés en fonction de bits du premier ensemble ;
      (j1) selon un code prédéterminé, codage de la valeur de chaque bit de parité calculé par une suite de bits b1 b2...bn de longueur n supérieure ou égale à 1 ;
      (j2) pour chaque bit bi, i = 1 à n : si et seulement si bi = 0, sélection d'un des bits du deuxième ensemble et si et seulement si bi = 1, sélection d'un des bits du troisième ensemble ;
      (j3) ladite transmission d'informations relatives aux bits de parité calculés comprend la transmission, sur le canal classique, pour chaque bit de parité calculé, d'une suite ind1 ind2 ...indn où indi indique le numéro d'index associé audit bit sélectionné dans le deuxième ou troisième ensemble à l'étape j2 pour le bit bi ;
   - si l'étape (jj) est mise en œuvre, ladite étape (jj) comporte les étapes suivantes :
      les informations reçues en provenance du premier dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : détermination de la valeur du bit bi associé, dans la mémoire du deuxième dispositif, au numéro d'index indi pour i = 1 à n, et décodage selon un code déterminé, de la valeur de chaque bit de parité en fonction de la suite de bits b1 b2... bn déterminée pour ledit bit de parité ;
      ladite détection d'erreurs est une détection d'erreurs dans le premier ensemble de bits pour définir la clé secrète et est effectuée en fonction des dites valeurs des bits de parité ainsi décodées.

Dans des modes de réalisation, un tel procédé comprendra en outre l'une au moins des caractéristiques suivantes :
- le procédé de distribution quantique de clé comprend l'une ou l'autre des dispositions parmi :
   - si la valeur de bi est 0, l'information transmise relative à bi indique le numéro d'index du bit sélectionné du deuxième ensemble et si la valeur de bi est 1, l'information transmise relative audit bit indique ainsi le numéro d'index du bit sélectionné du troisième ensemble ; ladite sélection étant effectuée par tirage ;
- le deuxième dispositif comporte au moins deux bases distinctes de correspondance entre des valeurs du paramètre et les valeurs 0 ou 1 d'un bit estimé, parmi plusieurs bases distinctes, et le deuxième dispositif sélectionne aléatoirement, pour chaque impulsion considérée dans la séquence d'impulsions, une base parmi les au moins deux bases distinctes, pour effectuer l'estimation de la valeur d'au moins ledit bit en fonction de la mesure dudit paramètre et stocke, pour chaque bit de la séquence, quelle base a été sélectionnée ;

après l'étape de réception, le deuxième dispositif envoie au premier dispositif sur le canal classique l'indication de la base que le deuxième dispositif a sélectionnée pour chaque bit de la séquence de bits, telle que stockée et reçoit dudit premier dispositif sur le canal classique l'indication de la base que ledit premier dispositif a sélectionnée pour coder chaque bit de la séquence ;
comparaison, pour chaque bit de la séquence, des indications de base stockée et reçue et identification des bits de la séquence pour lequel la base sélectionnée par le premier dispositif et le deuxième dispositif sont identiques ;
les premier, deuxième et troisième ensembles de bits sont composés de bits ainsi identifiés.

Suivant un autre aspect, l'invention décrit un programme d'ordinateur destiné à être stocké dans la mémoire d'un deuxième dispositif et comprenant en outre un microcalculateur, ledit programme d'ordinateur comprenant des instructions qui, lorsqu'elles sont exécutées sur le microcalculateur, orchestrent les étapes d'un procédé selon ce précédent aspect de l'invention.

Suivant un autre aspect, l'invention décrit un dispositif de télécommunication adapté pour être relié à une première liaison de télécommunication et pour être relié à une deuxième liaison de télécommunication connectant ledit dispositif à un autre dispositif de télécommunication,
ladite première liaison étant une liaison de transmission optique et étant nommée ci-après canal quantique, ladite deuxième liaison de télétransmission étant nommé ci-après canal classique ;
ledit dispositif étant adapté pour recevoir une séquence d'impulsions lumineuses sur le canal quantique et pour chaque impulsion lumineuse de la séquence d'impulsions reçue, effectuer une mesure d'un paramètre de l'impulsion lumineuse;
ledit dispositif étant adapté pour estimer, pour chaque impulsion lumineuse, la valeur d'au moins un bit codé par ladite impulsion en fonction de ladite mesure du paramètre ; les bits estimés en fonction des impulsions lumineuses de la séquence définissant une séquence de bits ;
ledit dispositif étant adapté pour effectuer au moins une opération parmi les opérations j et jj ci-dessous :
   - (j) une opération j comportant au moins :
   - un calcul de bits de parité en fonction de bits de ladite séquence ; et
   - une transmission, à destination de l'autre dispositif, d'informations relatives aux bits de parité calculés ;
(jj) une opération jj comportant au moins :
   - une réception d'informations en provenance de l'autre dispositif et relatives à des bits de parité calculés par ledit autre dispositif en fonction d'au moins de bits correspondant à la séquence de bits ; puis
   - une détection d'erreurs dans la séquence de bits en fonction des informations reçues relatives aux bits de parité ;
ledit dispositif étant caractérisé en ce qu'il est adapté pour répartir au moins certains des bits de la séquence en 3 ensembles de bits distincts, chaque bit étant associé à un numéro d'index fonction de son rang au sein au moins desdits certains bits : un premier ensemble de bits pour définir la clef secrète, un deuxième ensemble de bits égaux à 0 et un troisième ensemble de bits égaux à 1 ; chaque bit d'au moins les deuxième et troisième ensembles étant associé, dans une mémoire du dispositif, à son numéro d'index ;
   - si le dispositif effectue l'opération (j), le dispositif est adapté pour, lors de ladite opération :
      (j0) calculer les bits de parité en fonction de de bits du premier ensemble ;
      (j1) coder, selon un code prédéterminé, la valeur de chaque bit de parité calculé par une suite de bits b1 b2...bn de longueur n supérieure ou égale à 1 ;
      (j2) pour chaque bit bi, i = 1 à n : si et seulement si bi = 0, sélectionner un des bits du deuxième ensemble et si et seulement si bi = 1, sélectionner un des bits du troisième ensemble ;
      (j3) pour transmettre les informations relatives aux bits de parité calculés : transmettre, sur le canal classique, pour chaque bit de parité calculé, une suite ind1 ind2 ...indn où indi indique le numéro d'index associé audit bit sélectionné dans le deuxième ou troisième ensemble à l'étape j2 pour le bit bi ;
   - si le dispositif effectue l'opération (jj), le dispositif est adapté pour, lors de ladite opération :
      les informations reçues en provenance de l'autre dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : déterminer la valeur du bit bi associé, dans la mémoire du dispositif, au numéro d'index indi pour i = 1 à n, et décodage selon un code déterminé, de la valeur de chaque bit de parité en fonction de la suite de bits b1 b2... bn déterminée pour ledit bit de parité ;
      effectuer, en fonction des dites valeurs des bits de parité ainsi décodées, ladite détection d'erreurs dans le premier ensemble de bits pour définir la clé secrète.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente schématiquement un système de génération de clé QKD dans un mode de réalisation de l'invention ;
[Fig.2] La figure 2 représente les étapes d'un procédé de distribution de clé quantique dans un mode de réalisation de l'invention ;
[Fig. 3] La figure 3 illustre la transmission et détection d'une séquence de qubits dans un mode de réalisation de l'invention ;
[Fig. 4] La figure 4 représente un exemple de partitionnement de la séquence aléatoire de qubits en trois ensembles effectué dans D_ALICE et D_BOB ;

Des références identiques peuvent être utilisées dans des figures différentes lorsqu'elles désignent des éléments identiques ou comparables.

### Description détaillée :

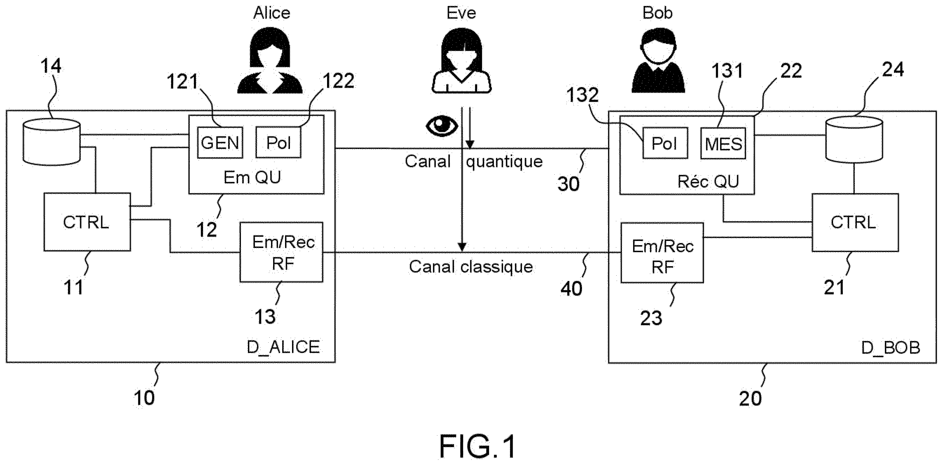

La figure 1 représente un système de génération de clé symétrique par QKD dans un mode de réalisation de l'invention, comprenant deux dispositifs de télécommunication 10, 20 reliés entre eux par un canal quantique 30 et un canal classique 40. Chaque ou l'un des dispositifs de télécommunication 10, 20 est par exemple au sol, ou embarqué dans un satellite, un aéronef etc.

Le canal quantique 30 est un canal de télécommunication qui permet le transit d'une information (binaire en DV-QKD ou continue en CV-QKD) portée par une propriété d'un objet quantique (ex : polarisation d'un photon) transmis sur ce canal ; ici le canal quantique 30 est adapté pour transmettre des impulsions lumineuses (une liaison optique de type fibre optique ou simplement mise en œuvre par une source de photons directionnelle dans l'air libre, l'atmosphère, l'Espace...).

Le canal classique 40 est un canal de communication par exemple standard (ex : liaison radiofréquence, réseau internet, fibre optique...), supposé accessible en clair par tous (dont un tiers malveillant Eve), pour permettre aux dispositifs de télécommunication 10 et 20 de converger vers la définition d'une clé secrète sur la base de qubits transmis, comme décrit ci-après pour le protocole BB84.

Le dispositif de télécommunication 10, nommé ci-après D_ALICE, d'utilisateur Alice, comporte un bloc de contrôle 11, un bloc d'émission quantique 12, un bloc d'émission/réception radiofréquence (RF) 13 et une mémoire 14.

Le dispositif de télécommunication 20, nommé ci-après D_BOB, d'utilisateur Bob, comporte un bloc de contrôle 21, un bloc de réception quantique 22, un bloc d'émission/réception radiofréquence (RF) 23 et une mémoire 24.

Les blocs d'émission/réception radiofréquence (RF) 13 et 23 sont adaptés pour communiquer ensemble via le canal classique 40.

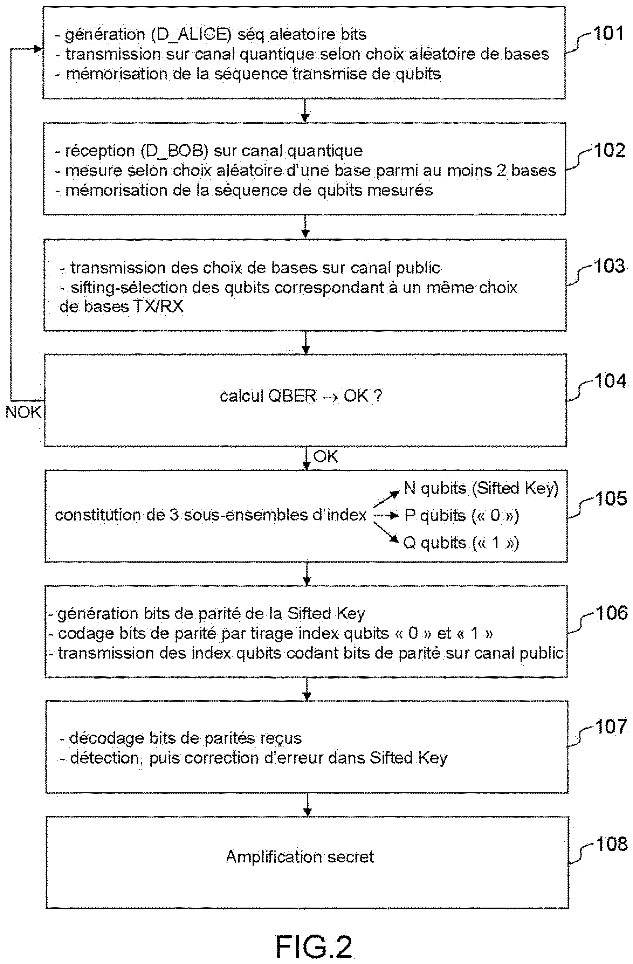

Le bloc de contrôle 11, respectivement 21, comporte par exemple une mémoire et un microprocesseur (non représentés). Dans un mode de réalisation, la mémoire du bloc de contrôle 11, respectivement 21, comporte des instructions logicielles, qui lorsqu'elles sont exécutées sur le microprocesseur du bloc de contrôle 11, respectivement 21, mettent en œuvre les étapes incombant au bloc de contrôle 11, respectivement 21, et décrites plus loin, notamment en référence à la figure 2.

Le bloc d'émission/réception radiofréquence (RF) 13, respectivement 23, comporte typiquement un modem et une antenne d'émission et réception radiofréquence (non représentés).

Le bloc d'émission quantique 12 comporte un bloc de génération, nommé GEN 121, et un bloc de polarisation, nommé Pol 122.

Le bloc GEN 121 est adapté pour générer aléatoirement une séquence de bits à transmettre.

Le bloc Pol 122 est adapté pour choisir aléatoirement, pour chaque bit à transmettre, une base parmi plusieurs bases de polarisation de références (ces bases sont encore appelés modes ou quadratures) et pour transmettre une impulsion lumineuse avec une polarisation correspondant, à la valeur du bit à transmettre dans la base choisie aléatoirement pour ce bit.

Le bloc Pol 122 comporte par exemple un rotateur de polarisation, apte à faire pivoter la polarisation du signal lumineux émis, sélectivement de 0° (si choix de base H/V par le bloc Pol 132) ou de 45° (si choix de base D/A), la sélection entre 0° et 45° étant réalisée de manière aléatoire. Par exemple, le rotateur de polarisation est réalisé avec une lame à retardement demi-onde dont la rotation est assurée par un actionneur.

Les bases, dans le cas présent, comportent par exemple :
- une première base Horizontale/Verticale (H/V) dans laquelle "1" est codé par un photon d'axe de polarisation 0° et "0" par un photon de polarisation 90° ;
- une deuxième base Diagonale/antidiagonale (D/A) dans laquelle "0" est codé par un photon d'axe de polarisation 45° et "1" par un photon de polarisation 135°.

Le bloc de réception quantique 22 comporte un bloc de polarisation, nommé Pol 132, et un bloc de mesure 131.

Avant l'arrivée prévue d'un photon, le bloc Pol 132 est adapté pour réaliser une rotation de polarisation afin de choisir aléatoirement une base parmi les deux bases H/V et D/A. Le bloc Pol 132 comporte un rotateur de polarisation, apte à faire pivoter la polarisation du signal lumineux émis, sélectivement de 0° (si choix de base H/V par le bloc Pol 132) ou de 45° (si choix de base D/A). Par exemple, le rotateur de polarisation est réalisé avec une lame à retardement demi-onde dont la rotation est assurée par un actionneur.

Le bloc de mesure 131 est adapté pour mesurer deux composantes lumineuses en quadrature à la sortie du rotateur de polarisation Pol 132, soit sur la base H/V si la rotation de polarisation est de 0°, ou sur la base D/A si la rotation de polarisation est de 45°. Par exemple, le bloc de mesure est réalisé avec un séparateur de faisceau polarisant (PBS) générant une quadrature, et deux détecteurs de photons (SPD) pour les deux composantes de la quadrature.

On rappelle ici qu'un photon peut être polarisé selon un axe quelconque. Un photon polarisé selon un axe d'angle 'a' passant dans un filtre polarisant selon un axe d'angle 'b' possède une probabilité égale à cos²(b-a) de passer le filtre polarisant, selon la loi de Malus.

D'après les propriétés quantiques utilisées par la cryptographie quantique :
- quand la probabilité de passer le filtre n'est ni 0 ni 1, le passage d'un photon individuel à travers le filtre est fondamentalement imprévisible et indéterministe ;
- on ne peut connaître l'axe de polarisation qu'en employant un filtre polarisant (ou plus généralement, en faisant une mesure dont le résultat est OUI ou NON) et avec un grand nombre de mesure pour estimer la probabilité de passage; il n'existe pas de mesure directe, donnant un angle par exemple, de l'axe de polarisation du photon ;
- on ne peut connaître l'axe de polarisation initial du photon que si l'axe du filtre est orienté précisément à 0° ou à 90° par rapport à celui du photon. Dans le cas d'une autre orientation du filtre (45° par exemple), il n'y a fondamentalement aucun moyen de savoir quel était l'axe de polarisation initial du photon.

Les étapes d'un procédé QKD sont maintenant décrites en référence à la figure 2.

Le contexte de départ est le suivant : Alice souhaite partager une clé secrète avec Bob pour leur permettre de réaliser des transmissions chiffrées avec une sécurité maximale. De son côté, Eve tente d'intercepter les communications pour déterminer la clé. Conformément aux principes de Kerckhoff (hypothèse du pire cas), on suppose par exemple qu'Eve a accès aux canaux de communication utilisés par Alice et Bob, qu'elle connaît parfaitement le protocole utilisé et dispose de moyens de calculs illimités. La sécurité des communications cryptées entre Alice et Bob est alors assurée uniquement par la clé secrète que le procédé décrit ci-après a pour résultat de générer et distribuer.

### PHASE QUANTIQUE

Généralement, seule cette phase utilise le canal quantique, la phase de post-traitement ne l'utilisant pas.

### Etape 101

Dans cette étape 101 :
- en réponse à une commande correspondante du bloc de contrôle 11 au bloc GEN 121, le bloc GEN 121 généré aléatoirement une séquence de N0 qubits prenant donc comme valeur 0 ou 1 ;
- suite à la réception d'une commande respective du bloc de contrôle 11 au bloc Pol 122 , le bloc Pol 122 choisit aléatoirement, pour chaque bit généré, une base de polarisation parmi les deux bases de polarisation et émet sur le canal quantique 30, photon par photon, un photon dont la polarisation est fonction de la valeur du bit généré et de la base de polarisation choisie pour ce qubit ; chaque photon est émis à intervalle régulier. Les qubits sont ainsi transmis.

La séquence de qubits générée est alors stockée par le bloc de contrôle 11 dans la mémoire 14 et la valeur de chaque bit y est stockée, associée au rang du bit dans la séquence et à la base de polarisation choisie pour le bit par le bloc Pol 122.

### Etape 102

Sous la commande du bloc de contrôle 21, avant l'arrivée prévue de chaque photon, le bloc Pol 132 choisit aléatoirement une base (en positionnant le rotateur aléatoirement). Au moment prévu de l'arrivée d'un photon, sous la commande du bloc de contrôle 21, le bloc de mesure 131 effectue une mesure de ce qui sort du filtre sur les composantes sélectionnées. Le bloc de contrôle 21 détermine la valeur du qubit correspondant au photon reçu en fonction de la mesure effectuée et de la base choisie pour la mesure (correspondant à l'orientation choisie du filtre par le bloc de filtrage polarisant 132) et stocke dans la mémoire 24, pour chaque photon reçu, la valeur du qubit déterminée, en association avec le rang de réception du photon (et donc du qubit) et la base choisie.

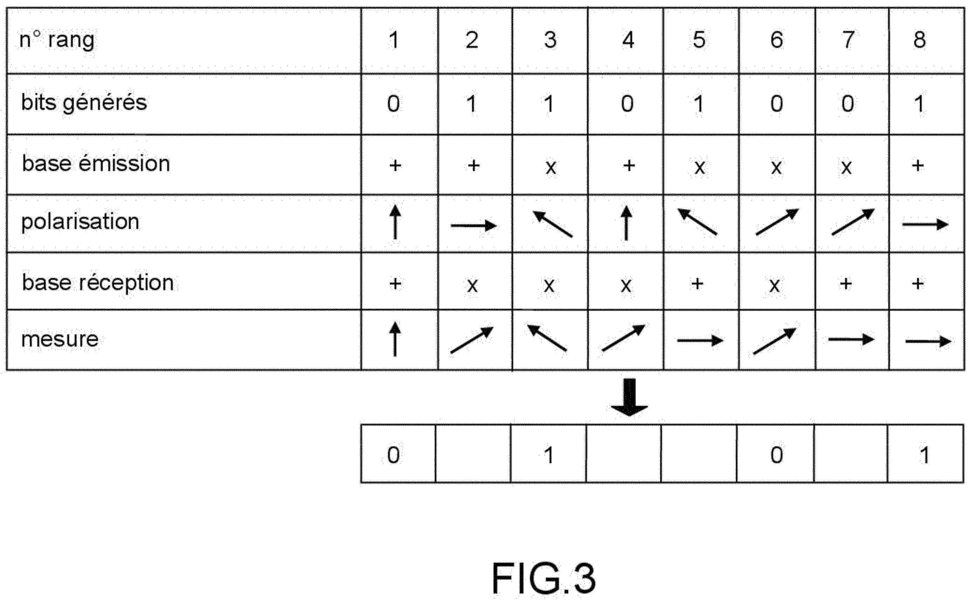

La figure 3 représente dans un tableau, le numéro de rang des 8 premiers bits d'une séquence générée à l'étape 101 (première ligne du tableau) et la valeur générée aléatoirement pour ces bits (deuxième ligne). Ces bits prennent ainsi les valeurs suivantes : 0 pour le bit de rang 1, 4, 6 et 7 et 1 pour le bit de rang 2, 3, 5 et 8.

La troisième ligne indique la base choisie pour l'émission de chaque bit par le dispositif D_ALICE 10 : le signe « + » indique que la base H/V a été choisie tandis que le signe « x » indique que la base D/A a été choisie. Ainsi pour les bits de rang 1, 2, 4 et 8, la base H/V a été choisie, et la base D/A a été choisie pour les bits de rang 3, 5 à 7.

La 4^{ème} ligne indique la polarisation du photon émis : verticale pour le bit de rang 1, 4, horizontale pour le bit de rang 2 et 8, diagonale pour le bit de rang 6 et 7, antidiagonale pour les bits de rang 3 et 5.

La cinquième ligne du tableau indique la base choisie par le dispositif D_BOB 20, en réception : H/V pour le photon reçu au rang 1, 5, 7 et 8 et D/A pour le photon de rang 2, 3, 4 et 6.

Enfin la sixième ligne illustre le résultat de la mesure par le dispositif D_BOB 20 : pour les photons de rang 1, 3, 6, 8 la base de mesure correspond à la base d'émission et la polarisation du photon détecté correspond en général à la polarisation à l'émission du photon ; pour les photons de rang 2, 4, 5, 7 la base de mesure est différente de la base d'émission et la polarisation du photon détecté est totalement aléatoire. La valeur du qubit déterminée stockée dans la mémoire 24 est 0 pour le photon de rang 1 et 6 et est 1 pour le photon de rang 3 et 8.

### PHASE DE POST-TRAITEMENT

### Etape 103 (sifting)

Dans une étape 103 :
- le contrôleur 11 du dispositif D_ALICE 10 indique au dispositif D_BOB 20, via le bloc d'émission/réception RF 13, par un message transmis sur le canal classique 40, la base de polarisation choisie pour chaque qubit de la séquence transmise à l'étape 101 ;
- le contrôleur 21 du dispositif D_BOB indique au dispositif D_ALICE, via le bloc d'émission/réception RF 23, par un message transmis sur le canal classique 40, la base de polarisation choisie pour chaque photon de la séquence reçue à l'étape 102 ;
- chaque contrôleur 11, respectivement 21, compare ensuite pour chaque rang dans la séquence, la base de polarisation choisie reçue sur le canal classique 40 et la base de polarisation associée à ce rang qui est stockée, dans la mémoire du dispositif 10, respectivement 20 ; il ne retient sélectivement (étape de Sifting) que les qubits générés (D_ALICE 10) et mesurés (D_BOB 20) sur une même base. Statistiquement seuls 50% des bits sont retenus.

Tous ces qubits retenus ont été transmis à Bob, avec une probabilité de 1-ε, c'est-à-dire aux erreurs près induites par les bruits, les défauts de réglage / synchronisation et les imperfections de réalisation. Le sifting a permis d'écarter les qubits dont la détection a été réalisée sur une autre base que la base de génération, ces qubits étant non fiables (à 50% : donc aléatoires). Chaque qubit retenu est identifié par son rang dans la séquence émise par D_ALICE/reçue par D_BOB.

Dans l'exemple en figure 3, les bits de rang 1, 3, 6 et 8 sont ainsi seuls retenus, parmi les huit premiers bits de la séquence, pour la suite des étapes.

### Etape 104

Les blocs de contrôle 11 et 21 évaluent ensuite le taux d'erreurs de transmission des qubits (QBER pour 'Quantum Bit Error Rate) séparant leurs ensembles respectifs de bits retenus à l'étape 103 de sfiting, afin de détecter l'interception éventuelle par Eve, d'évaluer la quantité d'information interceptée par Eve sur le canal quantique lors de la transmission à l'étape 101 et pour sélectionner éventuellement, en fonction du taux d'erreur évalué, un code correcteur d'erreur (choix du code et du rendement) ou pour paramétrer un protocole itératif de correction d'erreur par requête/réponse pour la suite du traitement. Pour ce faire, un certain nombre de qubits sont "sacrifiés" puisqu'ils sont communiqués sur le canal classique 40 : ils sont eux aussi écartés des bits retenus par les blocs de contrôle 11 et 21 pour la suite du post-traitement.

En fonction de la comparaison entre cette évaluation du taux d'erreurs et un seuil donné (déterminant si un tiers a écouté le canal quantique pendant la transmission des qubits), il est mis fin à la présente opération de distribution (qui pourra alors être ré-initiée à partir de l'étape 101) ; dans le cas contraire, l'étape 105 est mise en oeuvre.

### Etape 105

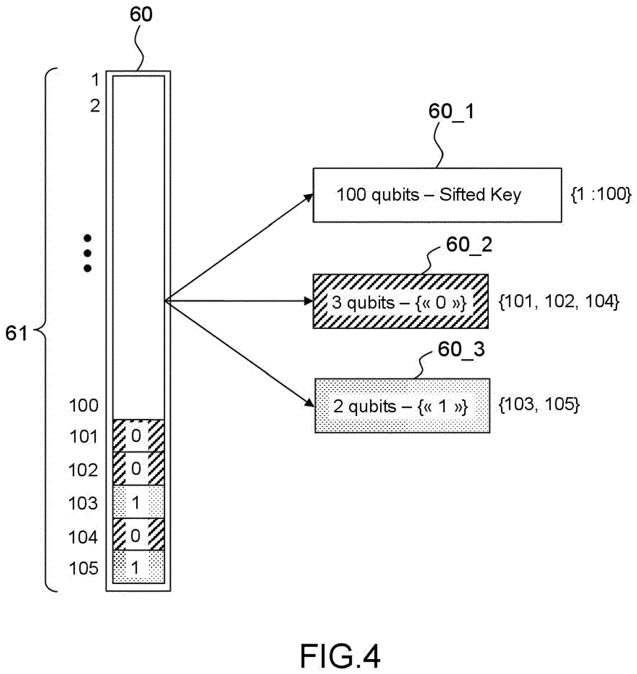

Dans cette étape 105, en référence à la figure 4, chaque bloc de contrôle 11, respectivement 21, en parallèle l'un de l'autre, partitionne en trois ensembles les M qubits issus du sifting 103 et retenus à l'issue de l'étape 104, selon une règle de partition commune et prédéfinie :
- un ensemble 60_1 de N qubits, destinés à constituer la Sifted Key respectivement pour Alice et Bob (la règle de partition les définit par exemple comme les N bits de plus faible rang, ou alors de plus fort rang) ;
- et les M-N qubits restant sont répartis, eux, en deux ensembles : un ensemble 60_2 des qubits de valeur 0 et un ensemble des qubits 60_3 des bits de valeur 1.

Le bloc de contrôle 11, 21 stocke en mémoire 14, 24, pour chacun des M bits, une indication de l'ensemble 60_1, 60_2 ou 60_3 auquel ce bit a été affecté, en association avec la valeur du bit.

L'ensemble 60_2 des bits de valeur 0 comporte P bits et l'ensemble des bits 60_3 des bits de valeur 1 comporte Q bits. La génération aléatoire est supposée produire des '0' et des '1' de manière indépendante et équi-probable. Pour M-N assez grand, par exemple supérieur à **20,** en général P ≈ Q.

Dans l'exemple représenté en figure 3, M = 105, N = 100, P = 3 et Q =2.

La liste 61 des numéros d'index en figure 4 indique le numéro d'index associé à chacun des M qubits. Suivant les modes de réalisation, le numéro d'index est égal au rang (i.e. numéro d'ordre) du qubit dans la séquence émise/reçue (avant sifting), ou est égal au rang du qubit dans les M qubits retenus (après sifting) parmi les N0 bits transmis ou plus généralement déterminé en fonction d'un tel rang du qubit parmi les qubits. Notamment si le numéro d'index est différent du rang, le bloc de contrôle 11, 21 stocke en outre en mémoire 14, 24, pour chacun des M bits, le numéro d'index associé à ce bit. La règle de définition du numéro d'index est bien sûr commune aux dispositifs D_ALICE 10 et D_BOB 20 et est prédéfinie.

Dans l'exemple de la figure 4 :
- les numéros d'index des qubits affectés à l'ensemble 60_2 des qubits égaux à 0 sont : 101, 102 et 104, tandis que les numéros d'index des qubits affectés à l'ensemble 60_3 des qubits égaux à 1 sont : 103, 105 ;
- la Sifted Key est définie par la suite des qubits associés aux numéros d'index 1 à 100.

Les qubits des ensembles 60_2 et 60_3 sont destinés à porter ultérieurement et éventuellement des informations de parité, comme cela sera décrit plus bas : en effet, seuls certains d'entre eux seront a priori effectivement utilisés, choisis en fonction des valeurs de parité qui devront être transmises entre les dispositifs 10 et 20.

Du fait des limitations des sources de photons et des détecteurs de photons, des imperfections de réalisation, de réglages ou de synchronisation, les N bits de la Sifted Key retenus à ce stade par D_ALICE et D_BOB ne sont pas généralement parfaitement identiques. L'étape 106 ci-dessous de la phase de réconciliation vise à détecter/corriger les erreurs résiduelles des N qubits de la clé « Sifted Key » déterminée respectivement par D_ALICE et D_BOB, en utilisant un code correcteur d'erreur de type FEC (Forward Error Correction code), ou bien un protocole interactif et itératif de requête/réponse entre Alice et Bob, pour déterminer et transmettre des bits de parité associés à des sous-groupes (i.e des paquets) des N qubits de la clé« Sifted Key », afin de détecter/corriger les erreurs résiduelles entre la clé d'Alice et celle de Bob et afin qu'ils disposent ensuite d'une clé rigoureusement identique.

Des informations redondantes de type parité sont ensuite générées soit par D_ALICE 10, soit par D_BOB 20, soit par les deux.

Comme décrit ci-après, ces parités sont transmises (indirectement via le canal public et le canal quantique) à l'autre partie, afin que cette dernière puisse identifier les erreurs résiduelles sur une clé sifted relativement à l'autre (Alice / Bob), conformément au protocole de détection et correction d'erreur retenu, en fonction des parités reçues et de sa propre sifted key.

### Etape 106

Dans un mode de réalisation, dans une étape 106, chaque bloc de contrôle 11, 21, en parallèle l'un de l'autre, calcule des bits de parité à partir de sous-groupes des N bits de la Sifted Key à l'étape 105, en fonction du protocole de détection et correction d'erreur retenu (ici protocole itératif de type Cascade ou Winnow) (la valeur des bits de parité n'est donc pas dépendante des bits des ensembles 60_2 et 60_3).

Les valeurs des bits de parité calculées par chaque bloc de contrôle 11, respectivement 21 sont stockées en mémoire 14, 24.

Pour faire connaître à D_ALICE 10, respectivement D_BOB 20, les valeurs des bits de parité calculés, le bloc de contrôle 21, respectivement 11, ne transmet pas les valeurs de ces bits de parité sur le canal classique 40, mais à la place, il transmet sur le canal classique 40 les numéros d'index de qubits sélectionnés dans les ensembles 60_2 et 60_3 qui codent la valeur des bits de parité.

Par exemple, pour chaque bit de parité considéré, le bloc de contrôle 11, respectivement 21, si le bit de parité est égal à 0, sélectionne (par exemple de manière aléatoire) un bit de l'ensemble 60_2, et transmet sur le canal classique à D_BOB 20, respectivement D_ALICE 10, le numéro d'index (101, 102 ou 104 dans le cas de la figure 4) associé au bit sélectionné pour indiquer la valeur du bit de parité considéré (le protocole QKD choisi définit les bits de la sifted key en fonction desquels le bit de parité a été calculé). Si le bit de parité est égal à 1, un bit de l'ensemble 60_3 est sélectionné (par exemple de manière aléatoire), et le bloc de contrôle 11, respectivement 21, transmet sur le canal classique à D_BOB 20, respectivement D_ALICE 10, le numéro d'index (103 ou 105) associé au bit sélectionné pour indiquer la valeur du bit de parité considéré.

### Etape 107

Dans un mode de réalisation, dans une étape 107, chaque bloc de contrôle 11, 21, en parallèle l'un de l'autre, reçoit sur le canal classique un message comportant le numéro d'index de bit d'un des ensembles 60_2 et/ou 60_3 qui code le bit de parité pour un sous-groupe de bits de la Sifted Key 60_1 ; il retrouve dans sa mémoire 14, 24, la valeur 0 ou 1 du bit associé au numéro d'index reçu. Il compare alors avec la valeur du bit de parité que lui-même a calculé pour ce même sous-groupe de bits. Les erreurs résiduelles entre la Sifted Key 60_1 détenue par D_ALICE 10 et D_BOB 20 peuvent ainsi être détectées et corrigées en fonction de cette comparaison effectuée pour chaque bit de parité. Ce processus permet d'obtenir, dans D_ALICE et D_BOB, une clé secrète rigoureusement identique, partagée entre Alice et Bob.

Un protocole itératif de type Cascade ou Winnow, implique un nombre variable de requêtes/réponses entre D_ALICE 10 et D_BOB 20, selon le nombre d'erreurs résiduelles ; un code correcteur d'erreurs de type FEC (Forward Error Correction code) implique un seul message envoyé par un des dispositifs 10, 20 pour détecter/corriger les erreurs résiduelles. Les échanges ont lieu sur le canal public 40.

Les étapes 106, 107 ci-dessus décrivent à titre d'exemple le cas d'un protocole itératif de type Cascade ou Winnow (calcul des bits de parité dans les dispositifs 10, 20 transmission par chaque dispositif à l'autre, comparaison dans chaque dispositif).

Dans le cas de l'utilisation d'un protocole de type code FEC LDPC, suivant les modes de réalisation :
- le bloc de contrôle D_Alice 11 calcule par exemple les bits de parités à partir des bits de la sifted clé d'Alice ; ces parités sont transmises au bloc de contrôle 21 de D_BOB 20, qui les décode avec sa version de sifted clé, pour identifier les erreurs sur sa clé (Bob) ; puis D_Bob corrige ses erreurs (dans un mode de réalisation particulier, il n'y a pas de calcul de bits de parité par D_BOB, ni de comparaison entre des bits de parité qu'il aurait reçus et d'autres qu'il aurait calculés en fonction de sa sifted Key) ; et/ou ou
- le bloc de contrôle de D_BOB 21 calcule par exemple les bits de parités à partir des bits de la sifted clé de Bob ; ces parités sont transmises au bloc de contrôle 11 de D_ALICE 10, qui les décode avec sa version de sifted clé, pour identifier les erreurs sur sa clé (Alice) ; puis D_ALICE corrige ses erreurs (dans un mode de réalisation particulier, pas de calcul de bits de parité par D_ALICE, ni de comparaison entre des bits de parité qu'il aurait reçus et d'autres qu'il aurait calculés en fonction de sa sifted Key).

Quel que soit le protocole de détection et correction d'erreur retenu, le principe reste le même : transmettre à l'autre dispositif une information pour accéder aux valeurs de parité sur le canal public en transmettant les index des qubits des ensembles 60_2 et 60_3 (ni les valeurs de ces qubits, ni les valeurs des bits de parité n'étant eux transmis sur le canal public).

### Etape 108

Une étape d'amplification du secret met en œuvre des fonctions de hachage pour combiner les bits de la clé obtenue à l'issue de l'étape 107 et ainsi réduire l'information d'Eve sur la clé finale, au prix d'une réduction de la taille de la clé. Les fonctions de hachage sont très difficilement inversibles, avec un comportement chaotique, et peuvent servir pour générer des nombre pseudo-aléatoires. Elles font souvent appel à l'arithmétique modulaire.

Exemple de fonction de hachage :

| |
|---|
| La proposition d'origine de Carter et Wegman (1) était de choisir p premier, p≥ \|U\| et de définir |
| *h_{a,b}*(*x*) = ((*ax* + *b*) mod *p*) mod *m* |

A l'issue de l'étape 108, Alice et Bob disposent d'une clé secrète partagée, qu'ils utilisent ensuite chacun comme clé de chiffrement symétrique pour coder et décoder des messages échangés entre eux sur le canal public ou un autre canal.

### Variante : plusieurs qubits pour coder un bit de parité

Une variante consiste à l'étape 106, à utiliser plusieurs qubits (et non un seul) pour coder la valeur d'un bit de parité. Cela permet d'avantager Alice/Bob dans l'élaboration d'une clé partagée, et de pénaliser Eve dans la recherche de cette clé. Une telle variante permet d'utiliser des codes correcteurs d'erreur à décision souple (plus performants) et de diluer la fiabilité des 50% de bits de parité accessibles à Eve.

Dans une telle variante, dans le bloc de contrôle 11, 21 du dispositif de télécommunication D_ALICE/D_BOB, les valeurs des bits de parité sont déterminées selon une technique de codage connue : codes correcteurs FEC, par exemple de type à décision souple (soft decoding) tels qu'un code FEC LDPC, protocoles itératifs (type Cascade ou Winnow). Pour chaque bit de parité à transmettre, le bloc de contrôle 11, 21 utilise un code pour représenter la valeur binaire avec un groupe de t bits portés par t qubits.

Par exemple, un code à répétition sur 3 bits (3 qubits associés à une même valeur binaire, mais pas forcément une même base) peut être utilisé pour représenter un bit de parité. La vraisemblance LLR (Logarithmic Likelihood Ratio) de la valeur du bit ainsi codé est alors la somme des LLR des valeurs binaires des 3 qubits. $LLR \left(b\right) = \frac{log \left(P\left(b=0\right)\right)}{log \left(P\left(b=1\right)\right)}$ ${LLR}_{bit partit é} = {\sum }_{i = 1}^{3} {LLR}_{bit qubit \left(i\right)}$

Ceci permet de filtrer les cas peu fréquents d'erreur de transmission/détection (si 1 qubit est mal transmis, les 2 autres suffisent pour compenser de sorte que la détection est correcte sur le groupe de 3 qubits). Le bloc de contrôle 11, 21 transmet les index de tous les qubits supports de parités. Pour cet exemple, cela fait trois fois plus de qubits supports de parité. Le bloc 21, 11 destinataire reçoit ces index, puis pour chaque bit de parité, accède en mémoire 14, 24 aux valeurs des t qubits associés à ces index et procède au décodage pour déterminer une probabilité de la valeur binaire. Par exemple avec le code à répétition de trois bits, une somme pondérée des valeurs binaires des trois qubits est utilisée. Ceci permet de quantifier plus finement la vraisemblance de la valeur binaire, et de réduire le taux d'erreur de transmission des qubits (ε). Le bloc de contrôle 21, 11 destinataire met en œuvre ensuite un algorithme de décodage (pour cet exemple : LDPC) à décision souple, exploitant en entrée des probabilités quantifiées.

Avant sifting, les qubits sont transmis avec un taux d'erreur typique de 50%. Après sifting, les qubits retenus sont affectés d'un taux d'erreur ε (typiquement de quelques %). Après sifting, la vraisemblance de la valeur d'un bit de parité est renforcée (statistiquement, en moyenne) lorsque plusieurs (t) qubits sont utilisés pour porter/coder cette valeur. Cela revient à utiliser un code correcteur pour chaque bit de parité, ou à diminuer le taux d'erreur ε. Cette vraisemblance n'est alors plus constante (probabilité de 1- ε avec un seul qubit / bit de parité), elle est variable en fonction des réalisations des p qubits. Il est alors avantageux d'utiliser des techniques de décodage à décision souple (ex : codes LDPC) qui sont plus performants que les solutions de décodage à décision dure (binaire).

D'autre part, sachant que 50% des qubits mesurés par Eve ne sont pas fiables (fiabilité de 50% : assimilable à du bruit aléatoire), la combinaison de plusieurs qubits pour représenter un bit de parité conduit à une dilution de la fiabilité des bits de parité pour Eve.

Selon l'invention, l'émission de l'information pour les parités est réalisée indirectement et successivement par le canal quantique, puis par le canal public : les qubits aléatoires servant de réserve pour coder les parités sont transmis sur le canal quantique, comme support potentiel d'une information indéfinie ; après sifting, les qubits retenus peuvent servir pour porter de l'information et le canal public est alors utilisé pour transmettre des index de qubits portant l'information des parités. Le destinataire détermine l'information des parités à partir de la réception de ces index, dont il se sert comme adresse pour les valeurs de qubits (préalablement reçus sur le canal quantique) stockées en mémoire 14, 24. Les valeurs de parité sont donc transmises indirectement par adresse sur le canal public.

Eve peut accéder à l'information d'index des qubits correspondant aux bits de parité, mais elle ne peut pas accéder aux valeurs respectives de tous ces qubits transmis sur le canal quantique. Eve peut connaître typiquement 50% des valeurs des qubits. Les valeurs de parité s'obtiennent, pour Alice et Bob, en accédant aux qubits portant l'information de parité via leurs index. Alice et Bob ayant réalisé préalablement un sifting, ils peuvent accéder aux valeurs correctes avec une probabilité de 1-ε. En revanche, Eve peut accéder à 50% des valeurs correctes des parités avec une probabilité de 1-ε, les valeurs restantes (la moitié) étant totalement indéfinies (0 ou 1 avec une vraisemblance de 50%).

Comme décrit, plusieurs qubits peuvent être utilisés pour porter l'information d'un bit de parité, pour renforcer la probabilité de détection de valeur correcte par Alice et Bob, et dégrader la fiabilité d'estimation des bits de parité par Eve (les 50% de qubits correctement reçus seront combinés avec des qubits incertains).

De façon générale, tous les protocoles QKD ont en commun le fait de mettre en œuvre des traitements de réconciliation et de correction d'erreurs pour générer deux clés identiques à partir de clés brutes (qubits transmis sur le canal quantique). L'invention proposée ici est applicable à tous les protocoles QKD, et ce indépendamment du mode de codage (ex : par polarisation / phase / ... ) et des variantes de ces protocoles.

Notamment, l'invention a été décrite ci-dessus en référence à la mise en œuvre de la transmission de l'information binaire aléatoire par la polarisation aléatoire des photons, par exemple dans le cadre du protocole BB84 ; l'invention est cependant applicable à tout protocole (ex : E91, B92...) et système de génération de clé symétrique de type QKD, entre autres des protocoles QKD à variables discrètes, avec d'autres paramètres quantiques utilisés pour coder les bits, par exemple la fréquence ou la phase d'un photon, optionnellement de manière différentielle (frequency-coded QKD ou phase-coded QKD ou Differential Phase-coded QKD ; dans le cas de l'utilisation de la phase, le codage repose sur un modulateur de phase à la place d'un rotateur/modulateur de polarisation) à la place ou en plus de la polarisation des photons, des protocoles (GG02) utilisant des variables continues, et/ou utilisant la transmission de plusieurs photons par bit...

Similairement, même s'il a été considéré ci-dessus un exemple de codage d'un seul bit par photon, l'invention s'applique également dans le cas où un paramètre du photon transmis sur le canal quantique code plusieurs bits, sur la base par exemple des protocoles permettant de coder plusieurs bits par impulsion lumineuse tels que les protocoles GG02, GMCS Gaussian Modulated Coherent-States

Par ailleurs, l'invention peut être mise en œuvre également dans des modes de réalisation sans choix aléatoire de base utilisée en réception et/ou en émission comme par exemple dans un protocole Differential Phase-coded QKD ; l'étape de correction des erreurs résiduelles est alors néanmoins toujours nécessaire.

L'invention peut être mise en œuvre également dans des modes de réalisation où le protocole QKD employé utilise la polarisation des photons pour coder les bits, mais avec un nombre d'états considérés différents des quatre états considérés dans BB84 : par exemple BB92 utilise 2 polarisations, SSP en utilise 6.

Les étapes incombant au bloc de contrôle 11, 21 décrites ci-dessus peuvent être mises en œuvre par l'exécution d'instructions logicielles sur un processeur. Alternativement, elles peuvent être mises en œuvre par un hardware dédié, typiquement un circuit intégré numérique, soit spécifique (ASIC) ou basé sur une logique programmable (par exemple FPGA/Field Programmable Gate Array).

Le terme « bit » désigne l'information binaire elle-même («0 » ou « 1 »), le terme « qubit » désigne plus spécifiquement cette information binaire quand elle est portée par un état quantique d'une particule élémentaire, en particulier d'un photon (i.e. génération et polarisation dans le dispositif 10, propagation dans le canal quantique et mesure dans le dispositif 20) ; toutefois, dans la description qui précède, l'un ou l'autre des deux termes pourront avoir été indistinctement utilisé pour désigner l'information binaire correspondante.

On notera que le choix aléatoire de la base de polarisation, tant en émission qu'en réception est réalisable de différentes manières : comme décrit ci-dessous, avec rotateur de polarisation et séparateur de faisceaux, ou encore par commutation mécanique d'un rotateur de polarisation etc. selon des techniques connues.

Par ailleurs, dans des modes de réalisation, le protocole QKD mis en œuvre est basé sur l'intrication (par exemple protocole E91) pour lesquels les photons sont générés par une source qui peut être externe à Alice et Bob. Dans ce cas, Alice ne génère pas la séquence binaire : Alice et Bob reçoivent cette séquence et sont comme 2 récepteurs qui s'accordent entre eux sur le décodage de la séquence de qubits recus, avec des choix de base aléatoires (A et B), conformément aux étapes 103 (pour le sifting notamment) et suivantes décrites ci-dessus.

## Revendications

1. Procédé de distribution quantique de clé secrète entre un premier et un deuxième dispositifs de télécommunication (D_ALICE, D_BOB) reliés par une première et une deuxième liaisons de télécommunication,
ladite première liaison (30) étant une liaison de transmission optique et étant nommée ci-après canal quantique, ladite deuxième liaison de télétransmission étant nommé ci-après canal classique (40) ;
ledit procédé comprenant les étapes suivantes mises en œuvre par le premier dispositif (D_ALICE) :
- génération d'une séquence aléatoire de bits par le premier dispositif ;
- pour chaque bit considéré successivement dans la séquence générée, codage dudit bit au moins par une valeur d'un paramètre définissant un état quantique d'une impulsion lumineuse respective comprenant au moins un photon, ladite valeur du paramètre étant déterminée en fonction d'au moins la valeur dudit bit ; une impulsion lumineuse présentant ladite valeur de paramètre étant ensuite émise sur le canal quantique et à destination du deuxième dispositif suite audit codage ;
ledit procédé étant **caractérisé en ce qu'**il comprend en outre les étapes suivantes mises en œuvre par le premier dispositif (D_ALICE) :
- au moins une étape parmi les étapes j et jj ci-dessous :
- une étape j comportant au moins
- un calcul de bits de parité en fonction de bits de la séquence générée ; et
- une transmission, à destination du deuxième dispositif, d'informations relatives aux bits de parité calculés ;
- une étape jj comportant au moins :
- une réception d'informations en provenance du deuxième dispositif et relatives à des bits de parité calculés par ledit deuxième dispositif en fonction de la réception, par le deuxième dispositif, des impulsions lumineuses émises par le premier dispositif ; puis
- une détection d'erreurs dans ladite séquence de bits en fonction des valeurs desdites informations relatives aux bits de parité reçues ;
et **en ce que** les étapes suivantes sont en outre mises en œuvre par le premier dispositif (D_ALICE) :
- répartition d'au moins certains des bits de la séquence générée en 3 ensembles de bits distincts, chaque bit étant associé à un numéro d'index fonction de son rang au sein d'au moins lesdits certains bits : un premier ensemble de bits pour définir la clé secrète, un deuxième ensemble de bits égaux à 0 et un troisième ensemble de bits égaux à 1 ; chaque bit d'au moins les deuxième et troisième ensembles étant associé, dans une mémoire du premier dispositif, à son numéro d'index ;
- si l'étape j est mise en œuvre, ladite étape j comporte les étapes suivantes :
j0/ les bits de parité sont calculés en fonction de bits du premier ensemble ;
j1/ selon un code prédéterminé, codage de la valeur de chaque bit de parité calculé par une suite de bits b1 b2...bn de longueur n supérieure ou égale à 1 ;
j2/ pour chaque bit bi, i = 1 à n : si et seulement si bi = 0, sélection d'un des bits du deuxième ensemble et si et seulement si bi = 1, sélection d'un des bits du troisième ensemble ;
j3/ ladite transmission d'informations relatives aux bits de parité calculés comprend la transmission, sur le canal classique, pour chaque bit de parité calculé, d'une suite ind1 ind2 ...indn où indi, i=1 à n, indique le numéro d'index associé audit bit sélectionné dans le deuxième ou troisième ensemble à l'étape j2 pour le bit bi ;
- si l'étape jj est mise en œuvre, ladite étape jj comporte les étapes suivantes :
jj0/ les informations reçues en provenance du deuxième dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : détermination de la valeur du bit bi associé, dans la mémoire du premier dispositif, au numéro d'index indi pour i = 1 à n, et décodage selon un code déterminé, de la valeur de chaque bit de parité en fonction de la suite de bits b1 b2... bn déterminée pour ledit bit de parité ;
jj1/ ladite détection d'erreurs est une détection d'erreurs dans le premier ensemble de bits pour définir la clé secrète et est effectuée en fonction des dites valeurs des bits de parité ainsi décodées.

2. Procédé de distribution quantique de clé secrète selon la revendication précédente, selon lequel :
si la valeur de bi est 0, l'information transmise relative à bi indique le numéro d'index du bit sélectionné du deuxième ensemble et si la valeur de bi est 1, l'information transmise relative audit bit indique ainsi le numéro d'index du bit sélectionné du troisième ensemble ; ladite sélection étant effectuée par tirage.

3. Procédé de distribution quantique de clé secrète selon l'une des revendications précédentes, selon lequel :
- le premier dispositif (D_ALICE) comporte au moins deux bases distinctes de codage entre des valeurs dudit paramètre et les valeurs 0 ou 1 d'un bit;
- le premier dispositif (D_ALICE) sélectionne aléatoirement, pour chaque bit considéré dans la séquence générée, une base parmi les au moins deux bases distinctes, pour effectuer ledit codage de bit par ladite valeur dudit paramètre d'impulsion lumineuse et stocke, pour chaque bit de la séquence, une indication de la base sélectionnée ;
- après l'émission d'impulsion lumineuse, transmission par le premier dispositif (D_ALICE) au deuxième dispositif (D_BOB) sur le canal classique de l'indication de la base que le premier dispositif (D_ALICE) a sélectionnée pour chaque bit de la séquence et réception en provenance dudit deuxième dispositif (D_BOB), sur le canal classique, de l'indication, pour chaque bit de la séquence, de la base que ledit deuxième dispositif (D_BOB) a sélectionnée pour évaluer la valeur dudit bit de la séquence ;
- comparaison, pour chaque bit de la séquence, des indications de base stockée et reçue et identification des bits de la séquence pour lequel la base sélectionnée par le premier dispositif et le deuxième dispositif sont identiques ;
- les premier, deuxième et troisième ensembles de bits sont composés de bits ainsi identifiés.

4. Programme d'ordinateur, destiné à être stocké dans la mémoire d'un premier dispositif et comprenant en outre un microcalculateur, ledit programme d'ordinateur comprenant des instructions qui, lorsqu'elles sont exécutées sur le microcalculateur, orchestrent les étapes d'un procédé selon l'une des revendications précédentes.

5. Dispositif de télécommunication (D_ALICE) étant adapté pour être relié à un autre dispositif de télécommunication (D_BOB) par une première et une deuxième liaisons de télécommunication,
ladite première liaison (30) étant une liaison de transmission optique et étant nommée ci-après canal quantique, ladite deuxième liaison de télétransmission étant nommé ci-après canal classique (40) ;
ledit dispositif (D_ALICE) étant adapté pour générer une séquence aléatoire de bits et pour chaque bit considéré successivement dans la séquence générée, pour coder ledit bit au moins par une valeur d'un paramètre définissant un état quantique d'une impulsion lumineuse respective comprenant au moins un photon, ladite valeur du paramètre étant déterminée en fonction d'au moins la valeur dudit bit, et pour émettre, sur le canal quantique et à destination de l'autre dispositif, une impulsion lumineuse présentant ladite valeur de paramètre ;
ledit dispositif (D_ALICE) étant **caractérisé en ce qu'**il est adapté pour effectuer au moins une opération parmi les opérations j et jj ci-dessous :
- une opération j comportant au moins
- un calcul de bits de parité en fonction de bits de la séquence générée ; et
- une transmission, à destination de l'autre dispositif, d'informations relatives aux bits de parité calculés ;
- une opération jj comportant au moins :
- une réception d'informations en provenance de l'autre dispositif et relatives à des bits de parité calculés par ledit autre dispositif en fonction de la réception, par l'autre dispositif, des impulsions lumineuses émises par le dispositif ; puis
- une détection d'erreurs dans ladite séquence de bits en fonction des valeurs desdites informations relatives aux bits de parité reçues ;
ledit dispositif (D_ALICE) étant **caractérisé en ce qu'**il est adapté pour répartir au moins certains des bits de la séquence générée en 3 ensembles de bits distincts, chaque bit étant associé à un numéro d'index fonction de son rang au sein d'au moins lesdits certains bits : un premier ensemble de bits pour définir une clé secrète, un deuxième ensemble de bits égaux à 0 et un troisième ensemble de bits égaux à 1 ; chaque bit d'au moins les deuxième et troisième ensembles étant associé, dans une mémoire du dispositif, à son numéro d'index ;
- si le dispositif effectue l'opération j, le dispositif est adapté pour, lors de ladite opération :
j0/ calculer les bits de parité en fonction de bits du premier ensemble ;
j1/ coder, selon un code prédéterminé, la valeur de chaque bit de parité calculé par une suite de bits b1 b2...bn de longueur n supérieure ou égale à 1 ;
j2/ pour chaque bit bi, i = 1 à n : si et seulement si bi = 0, sélectionner un des bits du deuxième ensemble et si et seulement si bi = 1, sélectionner un des bits du troisième ensemble ;
j3/ pour transmettre les informations relatives aux bits de parité calculés : transmettre, sur le canal classique, pour chaque bit de parité calculé, une suite ind1 ind2 ...indn où indi, i=1 à n, indique le numéro d'index associé audit bit sélectionné dans le deuxième ou troisième ensemble à l'étape j2 pour le bit bi ; et/ou
- si le dispositif effectue l'opération jj, le dispositif est adapté pour, lors de ladite opération :
jj0/ les informations reçues en provenance de l'autre dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : déterminer la valeur du bit bi associé, dans la mémoire du dispositif, au numéro d'index indi pour i = 1 à n, et décoder selon un code déterminé, la valeur de chaque bit de parité en fonction de la suite de bits b1 b2...bn déterminée pour ledit bit de parité ;
/jj1 effectuer, en fonction des dites valeurs des bits de parité ainsi décodées, ladite détection d'erreurs dans le premier ensemble de bits pour définir la clé secrète.

6. Procédé de distribution quantique de clé secrète vis-à-vis d'un premier et un deuxième dispositifs de télécommunication (D_ALICE, D_BOB) reliés chacun à une première liaison de télécommunication respective et reliés entre eux par une deuxième liaison de télécommunication,
ladite première liaison étant une liaison de transmission optique et étant nommée ci-après canal quantique, ladite deuxième liaison de télétransmission étant nommé ci-après canal classique ;
ledit procédé comprenant les étapes suivantes mises en œuvre par le deuxième dispositif (D_BOB) :
- réception d'une séquence d'impulsions lumineuses sur le canal quantique telle que pour chaque impulsion lumineuse de la séquence d'impulsions reçue, une mesure d'un paramètre de l'impulsion lumineuse est effectuée ;
- pour chaque impulsion lumineuse, estimation de la valeur d'au moins un bit codé par ladite impulsion en fonction de ladite mesure du paramètre ; les bits estimés en fonction des impulsions lumineuses de la séquence définissant une séquence de bits ;
ledit procédé étant **caractérisé en ce qu'**il comprend les étapes suivantes mises en œuvre par le deuxième dispositif (D_BOB) :
- au moins une étape parmi les étapes j et jj ci-dessous :
- une étape j comportant au moins :
- un calcul de bits de parité en fonction de bits de ladite séquence ; et
- une transmission, à destination du premier dispositif (D_ALICE), d'informations relatives aux bits de parité calculés ;
- une étape jj comportant au moins :
- une réception d'informations en provenance du premier dispositif et relatives à des bits de parité calculés par ledit premier dispositif; puis
- une détection d'erreurs dans la séquence de bits en fonction des informations reçues relatives aux bits de parité ;
et **en ce que** les étapes suivantes sont en outre mises en œuvre par le deuxième dispositif (D_BOB) :
- répartition d'au moins certains des bits de la séquence en 3 ensembles de bits distincts, chaque bit étant associé à un numéro d'index fonction de son rang au sein au moins desdits certains bits : un premier ensemble de bits pour définir la clé secrète, un deuxième ensemble de bits égaux à 0 et un troisième ensemble de bits égaux à 1 ; chaque bit d'au moins les deuxième et troisième ensembles étant associé, dans une mémoire du deuxième dispositif, à son numéro d'index ;
- si l'étape j est mise en œuvre, ladite étape j comporte les étapes suivantes :
j0/ les bits de parité sont calculés en fonction de bits du premier ensemble ;
j1/ selon un code prédéterminé, codage de la valeur de chaque bit de parité calculé par une suite de bits b1 b2...bn de longueur n supérieure ou égale à 1 ;
j2/ pour chaque bit bi, i = 1 à n : si et seulement si bi = 0, sélection d'un des bits du deuxième ensemble et si et seulement si bi = 1, sélection d'un des bits du troisième ensemble ;
j3/ ladite transmission d'informations relatives aux bits de parité calculés comprend la transmission, sur le canal classique, pour chaque bit de parité calculé, d'une suite ind1 ind2 ...indn où indi indique le numéro d'index associé audit bit sélectionné dans le deuxième ou troisième ensemble à l'étape j2 pour le bit bi ;
- si l'étape jj est mise en œuvre, ladite étape jj comporte les étapes suivantes :
les informations reçues en provenance du premier dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : détermination de la valeur du bit bi associé, dans la mémoire du deuxième dispositif, au numéro d'index indi pour i = 1 à n, et décodage selon un code déterminé, de la valeur de chaque bit de parité en fonction de la suite de bits b1 b2... bn déterminée pour ledit bit de parité ;
ladite détection d'erreurs est une détection d'erreurs dans le premier ensemble de bits pour définir la clé secrète et est effectuée en fonction des dites valeurs des bits de parité ainsi décodées.

7. Procédé de distribution quantique de clé secrète selon la revendication précédente, selon lequel : si la valeur de bi est 0, l'information transmise relative à bi indique le numéro d'index du bit sélectionné du deuxième ensemble et si la valeur de bi est 1, l'information transmise relative audit bit indique ainsi le numéro d'index du bit sélectionné du troisième ensemble ; ladite sélection étant effectuée par tirage.

8. Procédé de distribution quantique de clé secrète selon l'une des revendications 6, 7, selon lequel :
- le deuxième dispositif (D_BOB) comporte au moins deux bases distinctes de correspondance entre des valeurs du paramètre et les valeurs 0 ou 1 d'un bit estimé, parmi plusieurs bases distinctes, et le deuxième dispositif (D_BOB) sélectionne aléatoirement, pour chaque impulsion considérée dans la séquence d'impulsions, une base parmi les au moins deux bases distinctes, pour effectuer l'estimation de la valeur d'au moins ledit bit en fonction de la mesure dudit paramètre et stocke, pour chaque bit de la séquence, quelle base a été sélectionnée ;
- après l'étape de réception, le deuxième dispositif (D_BOB) envoie au premier dispositif (D_ALICE) sur le canal classique l'indication de la base que le deuxième dispositif (D_BOB) a sélectionnée pour chaque bit de la séquence de bits, telle que stockée et reçoit dudit premier dispositif (D_ALICE) sur le canal classique l'indication de la base que ledit premier dispositif (D_ALICE) a sélectionnée pour coder chaque bit de la séquence ;
- comparaison, pour chaque bit de la séquence, des indications de base stockée et reçue et identification des bits de la séquence pour lequel la base sélectionnée par le premier dispositif et le deuxième dispositif sont identiques ;
- les premier, deuxième et troisième ensembles de bits sont composés de bits ainsi identifiés.

9. Programme d'ordinateur, destiné à être stocké dans la mémoire d'un deuxième dispositif (D_BOB) et comprenant en outre un microcalculateur, ledit programme d'ordinateur comprenant des instructions qui, lorsqu'elles sont exécutées sur le microcalculateur, mettent en œuvre les étapes d'un procédé selon l'une des revendications 6 à 8.

10. Dispositif de télécommunication (D_BOB) adapté pour être relié à une première liaison de télécommunication et pour être relié à une deuxième liaison de télécommunication connectant ledit dispositif à un autre dispositif de télécommunication (D_ALICE),
ladite première liaison étant une liaison de transmission optique et étant nommée ci-après canal quantique, ladite deuxième liaison de télétransmission étant nommé ci-après canal classique ;
ledit dispositif (D_BOB) étant adapté pour recevoir une séquence d'impulsions lumineuses sur le canal quantique et pour chaque impulsion lumineuse de la séquence d'impulsions reçue, effectuer une mesure d'un paramètre de l'impulsion lumineuse ;
ledit dispositif (D_BOB) étant adapté pour estimer, pour chaque impulsion lumineuse, la valeur d'au moins un bit codé par ladite impulsion en fonction de ladite mesure du paramètre ; les bits estimés en fonction des impulsions lumineuses de la séquence définissant une séquence de bits ;
ledit dispositif (D_BOB) étant **caractérisé en ce qu'**il est adapté pour effectuer au moins une opération parmi les opérations j et jj ci-dessous :
- une opération j comportant au moins :
- un calcul de bits de parité en fonction de bits de ladite séquence ; et
- une transmission, à destination de l'autre dispositif (D_ALICE), d'informations relatives aux bits de parité calculés ;
- une opération jj comportant au moins :
- une réception d'informations en provenance de l'autre dispositif et relatives à des bits de parité calculés par ledit autre dispositif; puis
- une détection d'erreurs dans la séquence de bits en fonction des informations reçues relatives aux bits de parité ;
ledit dispositif (D_BOB) étant **caractérisé en ce qu'**il est adapté pour répartir au moins certains des bits de la séquence en 3 ensembles de bits distincts, chaque bit étant associé à un numéro d'index fonction de son rang au sein au moins desdits certains bits : un premier ensemble de bits pour définir une clé secrète, un deuxième ensemble de bits égaux à 0 et un troisième ensemble de bits égaux à 1 ; chaque bit d'au moins les deuxième et troisième ensembles étant associé, dans une mémoire du dispositif, à son numéro d'index ;
- si le dispositif effectue l'opération j, le dispositif est adapté pour, lors de ladite opération :
j0/ calculer les bits de parité en fonction de bits du premier ensemble ;
j1/ coder, selon un code prédéterminé, la valeur de chaque bit de parité calculé par une suite de bits b1 b2... bn de longueur n supérieure ou égale à 1 ;
j2/ pour chaque bit bi, i = 1 à n : si et seulement si bi = 0, sélectionner un des bits du deuxième ensemble et si et seulement si bi = 1, sélectionner un des bits du troisième ensemble ;
j3/ pour transmettre les informations relatives aux bits de parité calculés : transmettre, sur le canal classique, pour chaque bit de parité calculé, une suite ind1 ind2 ...indn où indi indique le numéro d'index associé audit bit sélectionné dans le deuxième ou troisième ensemble à l'étape j2 pour le bit bi ;
- si le dispositif effectue l'opération jj, le dispositif est adapté pour, lors de ladite opération :
les informations reçues en provenance de l'autre dispositif comportant, pour chacun desdits bits de parité, une suite ind1 ind2 ...indn où indi, i = 1 à n avec n ≥ 1, indique un numéro d'index associé à un bit dans le deuxième ou troisième ensemble, pour chaque bit de parité : déterminer la valeur du bit bi associé, dans la mémoire du dispositif, au numéro d'index indi pour i = 1 à n, et décodage selon un code déterminé, de la valeur de chaque bit de parité en fonction de la suite de bits b1 b2... bn déterminée pour ledit bit de parité ;
effectuer, en fonction des dites valeurs des bits de parité ainsi décodées, ladite détection d'erreurs dans le premier ensemble de bits pour définir la clé secrète.

## Patentansprüche

1. Verfahren zur Quantenverteilung eines geheimen Schlüssels zwischen einer ersten und einer zweiten Telekommunikationsvorrichtung (D_ALICE, D_BOB), die über eine erste und eine zweite Telekommunikationsverbindung miteinander verbunden sind,
wobei die erste Verbindung (30) eine optische Übertragungsverbindung ist und nachstehend als Quantenkanal bezeichnet wird, wobei die zweite Fernübertragungsverbindung nachstehend als klassischer Kanal (40) bezeichnet wird;
wobei das Verfahren die folgenden, von der ersten Vorrichtung (D_ALICE) durchgeführten Schritte umfasst:
- Erzeugen einer zufälligen Bitsequenz durch die erste Vorrichtung;
- für jedes nacheinander betrachtete Bit in der erzeugten Sequenz, Codieren des Bits mindestens durch einen Wert eines Parameters, der einen Quantenzustand eines jeweiligen Lichtimpulses definiert, welcher mindestens ein Photon umfasst, wobei der Wert des Parameters in Abhängigkeit von mindestens dem Wert des Bits bestimmt wird; wobei ein Lichtimpuls, der den Parameterwert aufweist, anschließend im Anschluss an die Codierung über den Quantenkanal und an die zweite Vorrichtung gesendet wird;
wobei das Verfahren **dadurch gekennzeichnet ist, dass** es weiter die folgenden, von der ersten Vorrichtung (D_ALICE) durchgeführten Schritte umfasst:
- mindestens einen Schritt aus den untenstehenden Schritten j und jj:
- einen Schritt j, der mindestens umfasst
- eine Berechnung von Paritätsbits in Abhängigkeit von Bits der erzeugten Sequenz; und
- eine Übertragung von Informationen bezüglich der berechneten Paritätsbits an die zweite Vorrichtung;
- einen Schritt jj, der mindestens umfasst:
- einen Empfang von Informationen von der zweiten Vorrichtung und bezüglich Paritätsbits, die von der zweiten Vorrichtung in Abhängigkeit von dem Empfang der von der ersten Vorrichtung gesendeten Lichtimpulse durch die zweite Vorrichtung berechnet wurden; danach
- eine Detektion von Fehlern in der Bitsequenz in Abhängigkeit von den Werten der empfangenen Informationen bezüglich der Paritätsbits;
und dass weiter die folgenden Schritte von der ersten Vorrichtung (D_ALICE) durchgeführt werden:
- Aufteilen mindestens einiger der Bits der erzeugten Sequenz in drei verschiedene Bitgruppen, wobei jedem Bit eine Indexnummer zugeordnet wird, die von seinem Rang innerhalb der mindestens einigen Bits abhängt: eine erste Bitgruppe, um den geheimen Schlüssel zu definieren, eine zweite Bitgruppe gleich 0 und eine dritte Bitgruppe gleich 1; wobei jedes Bit mindestens der zweiten und der dritten Gruppe in einem Speicher der ersten Vorrichtung seiner Indexnummer zugeordnet wird;
- wenn der Schritt j durchgeführt wird, umfasst der Schritt j die folgenden Schritte:
j0/ die Paritätsbits werden in Abhängigkeit von Bits der ersten Gruppe berechnet;
j1/ Codieren des Werts jedes berechneten Paritätsbits durch eine Bitfolge b1, b2, ..., bn einer Länge n größer oder gleich 1, gemäß einem vorbestimmten Code;
j2/ für jedes Bit bi, i = 1 bis n: wenn, und nur wenn bi = 0, Auswählen eines der Bits aus der zweiten Gruppe, und wenn, und nur wenn bi = 1, Auswählen eines der Bits aus der dritten Gruppe;
j3/ die Übertragung von Informationen bezüglich der berechneten Paritätsbits umfasst die Übertragung, für jedes berechnete Paritätsbit, einer Folge ind1, ind2, ..., indn über den klassischen Kanal, wobei indi, i = 1 bis n, die Indexnummer angibt, die dem in Schritt j2 für das Bit bi aus der zweiten oder dritten Gruppe ausgewählten Bit zugeordnet ist;
- wenn der Schritt jj durchgeführt wird, umfasst der Schritt jj die folgenden Schritte:
jj0/ da die von der zweiten Vorrichtung empfangenen Informationen für jedes der Paritätsbits eine Folge ind1, ind2, ..., indn umfassen, wobei indi, i = 1 bis n mit n ≥ 1, eine Indexnummer angibt, die einem Bit aus der zweiten oder der dritten Gruppe zugeordnet wurde, für jedes Paritätsbit: Bestimmen des Werts des Bits bi, das im Speicher der ersten Vorrichtung der Indexnummer indi für i = 1 bis n zugeordnet ist, und Decodieren des Werts jedes Paritätsbits gemäß einem bestimmten Code in Abhängigkeit von der für das Paritätsbit bestimmten Bitfolge b1, b2, ..., bn;
jj1/ die Fehlerdetektion ist eine Detektion von Fehlern in der ersten Bitgruppe, um den geheimen Schlüssel zu definieren, und wird in Abhängigkeit von den Werten der so decodierten Paritätsbits ausgeführt.

2. Verfahren zur Quantenverteilung eines geheimen Schlüssels nach dem vorstehenden Anspruch, wobei:
wenn der Wert von bi 0 ist, die bezüglich bi übertragene Information die Indexnummer des aus der zweiten Gruppe ausgewählten Bits angibt, und wenn der Wert von bi 1 ist, die bezüglich des Bits übertragene Information somit die Indexnummer des aus der dritten Gruppe ausgewählten Bits angibt; wobei die Auswahl durch Losen erfolgt.

3. Verfahren zur Quantenverteilung eines geheimen Schlüssels nach einem der vorstehenden Ansprüche, wobei:
- die erste Vorrichtung (D_ALICE) mindestens zwei verschiedene Basen zur Codierung zwischen Werten des Parameters und den Werten 0 oder 1 eines Bits umfasst;
- die erste Vorrichtung (D_ALICE) für jedes betrachtete Bit in der erzeugten Sequenz zufällig eine Basis aus den mindestens zwei verschiedenen Basen auswählt, um die Bit-Codierung durch den Wert des Lichtimpulsparameters auszuführen, und für jedes Bit der Sequenz eine Angabe der ausgewählten Basis speichert;
- nach dem Senden eines Lichtimpulses, Übertragen der Angabe der Basis, die die erste Vorrichtung (D_ALICE) für jedes Bit der Sequenz ausgewählt hat, durch die erste Vorrichtung (D_ALICE) über den klassischen Kanal an die zweite Vorrichtung (D_BOB), und Empfangen, für jedes Bit der Sequenz, der Angabe der Basis, die die zweite Vorrichtung (D_BOB) ausgewählt hat, von der zweiten Vorrichtung (D_BOB) über den klassischen Kanal, um den Wert des Bits der Sequenz zu beurteilen;
- Vergleichen der gespeicherten und der empfangenen Angabe der Basis für jedes Bit der Sequenz und Identifizieren der Bits der Sequenz, bei denen die von der ersten Vorrichtung und der zweiten Vorrichtung ausgewählte Basis identisch ist;
- die erste, die zweite und die dritte Bitgruppe werden aus so identifizierten Bits zusammengesetzt.

4. Computerprogramm, das dazu bestimmt ist, in dem Speicher einer ersten Vorrichtung gespeichert zu werden, und weiter einen Mikrorechner umfassend, wobei das Computerprogramm Anweisungen umfasst, die, wenn sie auf dem Mikrorechner ausgeführt werden, die Schritte eines Verfahrens nach einem der vorstehenden Ansprüche orchestrieren.

5. Telekommunikationsvorrichtung (D_ALICE), die dafür ausgelegt ist, über eine erste und eine zweite Telekommunikationsverbindung mit einer anderen Telekommunikationsvorrichtung (D_BOB) verbunden zu werden,
wobei die erste Verbindung (30) eine optische Übertragungsverbindung ist und nachstehend als Quantenkanal bezeichnet wird, wobei die zweite Fernübertragungsverbindung nachstehend als klassischer Kanal (40) bezeichnet wird;
wobei die Vorrichtung (D_ALICE) dafür ausgelegt ist, eine zufällige Bitsequenz zu erzeugen und für jedes nacheinander betrachtete Bit in der erzeugten Sequenz das Bit mindestens durch einen Wert eines Parameters zu codieren, der einen Quantenzustand eines jeweiligen Lichtimpulses definiert, welcher mindestens ein Photon umfasst, wobei der Wert des Parameters in Abhängigkeit von mindestens dem Wert des Bits bestimmt wird, und einen Lichtimpuls, der den Parameterwert aufweist, über den Quantenkanal und an die andere Vorrichtung zu senden;
wobei die Vorrichtung (D_ALICE) **dadurch gekennzeichnet ist, dass** sie dafür ausgelegt ist, mindestens einen Vorgang aus den untenstehenden Vorgängen j und jj auszuführen:
- einen Vorgang j, der mindestens umfasst
- eine Berechnung von Paritätsbits in Abhängigkeit von Bits der erzeugten Sequenz; und
- eine Übertragung von Informationen bezüglich der berechneten Paritätsbits an die andere Vorrichtung;
- einen Vorgang jj, der mindestens umfasst:
- einen Empfang von Informationen von der anderen Vorrichtung und bezüglich Paritätsbits, die von der anderen Vorrichtung in Abhängigkeit von dem Empfang der von der Vorrichtung gesendeten Lichtimpulse durch die andere Vorrichtung berechnet wurden; danach
- eine Detektion von Fehlern in der Bitsequenz in Abhängigkeit von den Werten der empfangenen Informationen bezüglich der Paritätsbits;
wobei die Vorrichtung (D_ALICE) **dadurch gekennzeichnet ist, dass** sie dafür ausgelegt ist, mindestens einige der Bits der erzeugten Sequenz in drei verschiedene Bitgruppen aufzuteilen, wobei jedem Bit eine Indexnummer zugeordnet wird, die von seinem Rang innerhalb der mindestens einigen Bits abhängt: eine erste Bitgruppe, um einen geheimen Schlüssel zu definieren, eine zweite Bitgruppe gleich 0 und eine dritte Bitgruppe gleich 1; wobei jedes Bit mindestens der zweiten und der dritten Gruppe in einem Speicher der Vorrichtung seiner Indexnummer zugeordnet wird;
- wenn die Vorrichtung den Vorgang j ausführt, die Vorrichtung dafür ausgelegt ist, bei dem Vorgang:
j0/ die Paritätsbits in Abhängigkeit von Bits der ersten Gruppe zu berechnen;
j1/ den Wert jedes berechneten Paritätsbits durch eine Bitfolge b1, b2, ..., bn einer Länge n größer oder gleich 1 gemäß einem vorbestimmten Code zu codieren;
j2/ für jedes Bit bi, i = 1 bis n: wenn, und nur wenn bi = 0, eines der Bits aus der zweiten Gruppe auszuwählen, und wenn, und nur wenn bi = 1, eines der Bits aus der dritten Gruppe auszuwählen;
j3/ die Informationen bezüglich der berechneten Paritätsbits zu übertragen: für jedes berechnete Paritätsbit eine Folge ind1, ind2, ..., indn, wobei indi, i = 1 bis n, die Indexnummer angibt, die dem in Schritt j2 für das Bit bi aus der zweiten oder der dritten Gruppe ausgewählten Bit zugeordnet ist, über den klassischen Kanal zu übertragen; und/oder
- wenn die Vorrichtung den Vorgang jj ausführt, die Vorrichtung dafür ausgelegt ist, bei dem Vorgang:
jj0/ da die von der anderen Vorrichtung empfangenen Informationen für jedes der Paritätsbits eine Folge ind1, ind2, ..., indn umfassen, wobei indi, i = 1 bis n mit n ≥ 1, eine Indexnummer angibt, die einem Bit aus der zweiten oder der dritten Gruppe zugeordnet wurde, für jedes Paritätsbit: den Wert des Bits bi, das im Speicher der Vorrichtung der Indexnummer indi für i = 1 bis n zugeordnet ist, zu bestimmen und den Wert jedes Paritätsbits in Abhängigkeit von der für das Paritätsbit bestimmten Bitfolge b1, b2, ..., bn gemäß einem bestimmten Code zu decodieren;
jj1/ in Abhängigkeit von den Werten der so decodierten Paritätsbits die Detektion von Fehlern in der ersten Bitgruppe auszuführen, um den geheimen Schlüssel zu definieren.

6. Verfahren zur Quantenverteilung eines geheimen Schlüssels an eine erste und eine zweite Telekommunikationsvorrichtung (D_ALICE, D_BOB), die jeweils mit einer ersten jeweiligen Telekommunikationsverbindung verbunden sind und über eine zweite Telekommunikationsverbindung miteinander verbunden sind,
wobei die erste Verbindung eine optische Übertragungsverbindung ist und nachstehend als Quantenkanal bezeichnet wird, wobei die zweite Fernübertragungsverbindung nachstehend als klassischer Kanal bezeichnet wird;
wobei das Verfahren die folgenden, von der zweiten Vorrichtung (D_BOB) durchgeführten Schritte umfasst:
- Empfang einer Lichtimpulssequenz über den Quantenkanal, sodass für jeden Lichtimpuls der empfangenen Impulssequenz eine Messung eines Parameters des Lichtimpulses ausgeführt wird;
- Schätzen, für jeden Lichtimpuls, des Werts mindestens eines durch den Impuls codierten Bits in Abhängigkeit von der Messung des Parameters; wobei die in Abhängigkeit von den Lichtimpulsen der Sequenz geschätzten Bits eine Bitsequenz definieren;
wobei das Verfahren **dadurch gekennzeichnet ist, dass** es die folgenden, von der zweiten Vorrichtung (D_BOB) durchgeführten Schritte umfasst:
- mindestens einen Schritt aus den untenstehenden Schritten j und jj:
- einen Schritt j, der mindestens umfasst:
- eine Berechnung von Paritätsbits in Abhängigkeit von Bits der Sequenz; und
- eine Übertragung von Informationen bezüglich der berechneten Paritätsbits an die erste Vorrichtung (D_ALICE);
- einen Schritt jj, der mindestens umfasst:
- einen Empfang von Informationen von der ersten Vorrichtung und bezüglich Paritätsbits, die von der ersten Vorrichtung berechnet wurden; danach
- eine Detektion von Fehlern in der Bitsequenz in Abhängigkeit von den empfangenen Informationen bezüglich der Paritätsbits;
und dass weiter die folgenden Schritte von der zweiten Vorrichtung (D_BOB) durchgeführt werden:
- Aufteilen mindestens einiger der Bits der Sequenz in drei verschiedene Bitgruppen, wobei jedem Bit eine Indexnummer zugeordnet wird, die von seinem Rang innerhalb der mindestens einigen Bits abhängt: eine erste Bitgruppe, um den geheimen Schlüssel zu definieren, eine zweite Bitgruppe gleich 0 und eine dritte Bitgruppe gleich 1; wobei jedes Bit mindestens der zweiten und der dritten Gruppe in einem Speicher der zweiten Vorrichtung seiner Indexnummer zugeordnet wird;
- wenn der Schritt j durchgeführt wird, umfasst der Schritt j die folgenden Schritte:
j0/ die Paritätsbits werden in Abhängigkeit von Bits der ersten Gruppe berechnet;
j1/ Codieren des Werts jedes berechneten Paritätsbits durch eine Bitfolge b1, b2, ..., bn einer Länge n größer oder gleich 1, gemäß einem vorbestimmten Code;
j2/ für jedes Bit bi, i = 1 bis n: wenn, und nur wenn bi = 0, Auswählen eines der Bits aus der zweiten Gruppe, und wenn, und nur wenn bi = 1, Auswählen eines der Bits aus der dritten Gruppe;
j3/ die Übertragung von Informationen bezüglich der berechneten Paritätsbits umfasst die Übertragung, für jedes berechnete Paritätsbit, einer Folge ind1, ind2, ..., indn über den klassischen Kanal, wobei indi die Indexnummer angibt, die dem in Schritt j2 für das Bit bi aus der zweiten oder der dritten Gruppe ausgewählten Bit zugeordnet ist;
- wenn der Schritt jj durchgeführt wird, umfasst der Schritt jj die folgenden Schritte:
da die von der ersten Vorrichtung empfangenen Informationen für jedes der Paritätsbits eine Folge ind1, ind2, ..., indn umfassen, wobei indi, i = 1 bis n mit n ≥ 1, eine Indexnummer angibt, die einem Bit aus der zweiten oder der dritten Gruppe zugeordnet wurde, für jedes Paritätsbit: Bestimmen des Werts des Bits bi, das im Speicher der zweiten Vorrichtung der Indexnummer indi für i = 1 bis n zugeordnet ist, und Decodieren des Werts jedes Paritätsbits gemäß einem bestimmten Code in Abhängigkeit von der für das Paritätsbit bestimmten Bitfolge b1, b2, ..., bn;
die Fehlerdetektion ist eine Detektion von Fehlern in der ersten Bitgruppe, um den geheimen Schlüssel zu definieren, und wird in Abhängigkeit von den Werten der so decodierten Paritätsbits ausgeführt.

7. Verfahren zur Quantenverteilung eines geheimen Schlüssels nach dem vorstehenden Anspruch, wobei: wenn der Wert von bi 0 ist, die bezüglich bi übertragene Information die Indexnummer des aus der zweiten Gruppe ausgewählten Bits angibt, und wenn der Wert von bi 1 ist, die bezüglich des Bits übertragene Information somit die Indexnummer des aus der dritten Gruppe ausgewählten Bits angibt; wobei die Auswahl durch Losen erfolgt.

8. Verfahren zur Quantenverteilung eines geheimen Schlüssels nach einem der Ansprüche 6, 7, wobei:
- die zweite Vorrichtung (D_BOB) mindestens zwei verschiedene Basen zur Entsprechung zwischen Werten des Parameters und den Werten 0 oder 1 eines geschätzten Bits aus mehreren verschiedenen Basen umfasst, und die zweite Vorrichtung (D_BOB) für jeden betrachteten Impuls in der Impulssequenz zufällig eine Basis aus den mindestens zwei verschiedenen Basen auswählt, um die Schätzung des Werts mindestens des Bits in Abhängigkeit von der Messung des Parameters auszuführen, und für jedes Bit der Sequenz speichert, welche Basis ausgewählt wurde;
- nach dem Schritt des Empfangens die zweite Vorrichtung (D_BOB) die Angabe der Basis, die die zweite Vorrichtung (D_BOB) für jedes Bit der Bitsequenz ausgewählt hat, so wie sie gespeichert ist über den klassischen Kanal an die erste Vorrichtung (D_ALICE) sendet, und von der ersten Vorrichtung (D_ALICE) über den klassischen Kanal die Angabe der Basis empfängt, die die erste Vorrichtung (D_ALICE) ausgewählt hat, um jedes Bit der Sequenz zu codieren;
- Vergleichen der gespeicherten und der empfangenen Angabe der Basis für jedes Bit der Sequenz und Identifizieren der Bits der Sequenz, bei denen die von der ersten Vorrichtung und der zweiten Vorrichtung ausgewählte Basis identisch ist;
- die erste, die zweite und die dritte Bitgruppe werden aus so identifizierten Bits zusammengesetzt.

9. Computerprogramm, das dazu bestimmt ist, in dem Speicher einer zweiten Vorrichtung (D_BOB) gespeichert zu werden, und weiter einen Mikrorechner umfassend, wobei das Computerprogramm Anweisungen umfasst, die, wenn sie auf dem Mikrorechner ausgeführt werden, die Schritte eines Verfahrens nach einem der Ansprüche 6 bis 8 durchführen.

10. Telekommunikationsvorrichtung (D_BOB), die dafür ausgelegt ist, mit einer ersten Telekommunikationsverbindung verbunden zu werden und mit einer zweiten Telekommunikationsverbindung verbunden zu werden, die die Vorrichtung mit einer anderen Telekommunikationsvorrichtung (D_ALICE) verbindet,
wobei die erste Verbindung eine optische Übertragungsverbindung ist und nachstehend als Quantenkanal bezeichnet wird, wobei die zweite Fernübertragungsverbindung nachstehend als klassischer Kanal bezeichnet wird;
wobei die Vorrichtung (D_BOB) dafür ausgelegt ist, über den Quantenkanal eine Lichtimpulssequenz zu empfangen und für jeden Lichtimpuls der empfangenen Impulssequenz eine Messung eines Parameters des Lichtimpulses auszuführen;
wobei die Vorrichtung (D_BOB) dafür ausgelegt ist, für jeden Lichtimpuls den Wert mindestens eines durch den Impuls codierten Bits in Abhängigkeit von der Messung des Parameters zu schätzen; wobei die in Abhängigkeit von den Lichtimpulsen der Sequenz geschätzten Bits eine Bitsequenz definieren;
wobei die Vorrichtung (D_BOB) **dadurch gekennzeichnet ist, dass** sie dafür ausgelegt ist, mindestens einen Vorgang aus den untenstehenden Vorgängen j und jj auszuführen:
- einen Vorgang j, der mindestens umfasst:
- eine Berechnung von Paritätsbits in Abhängigkeit von Bits der Sequenz; und
- eine Übertragung von Informationen bezüglich der berechneten Paritätsbits an die andere Vorrichtung (D_ALICE);
- einen Vorgang jj, der mindestens umfasst:
- einen Empfang von Informationen von der anderen Vorrichtung und bezüglich Paritätsbits, die von der anderen Vorrichtung berechnet wurden; danach
- eine Detektion von Fehlern in der Bitsequenz in Abhängigkeit von den empfangenen Informationen bezüglich der Paritätsbits;
wobei die Vorrichtung (D_BOB) **dadurch gekennzeichnet ist, dass** sie dafür ausgelegt ist, mindestens einige der Bits der Sequenz in drei verschiedene Bitgruppen aufzuteilen, wobei jedem Bit eine Indexnummer zugeordnet wird, die von seinem Rang innerhalb der mindestens einigen Bits abhängt: eine erste Bitgruppe, um einen geheimen Schlüssel zu definieren, eine zweite Bitgruppe gleich 0 und eine dritte Bitgruppe gleich 1; wobei jedes Bit mindestens der zweiten und der dritten Gruppe in einem Speicher der Vorrichtung seiner Indexnummer zugeordnet wird;
- wenn die Vorrichtung den Vorgang j ausführt, die Vorrichtung dafür ausgelegt ist, bei dem Vorgang:
j0/ die Paritätsbits in Abhängigkeit von Bits der ersten Gruppe zu berechnen;
j1/ den Wert jedes berechneten Paritätsbits durch eine Bitfolge b1, b2, ..., bn einer Länge n größer oder gleich 1 gemäß einem vorbestimmten Code zu codieren;
j2/ für jedes Bit bi, i = 1 bis n: wenn, und nur wenn bi = 0, eines der Bits aus der zweiten Gruppe auszuwählen, und wenn, und nur wenn bi = 1, eines der Bits aus der dritten Gruppe auszuwählen;
j3/ die Informationen bezüglich der berechneten Paritätsbits zu übertragen: für jedes berechnete Paritätsbit eine Folge ind1, ind2, ..., indn, wobei indi die Indexnummer angibt, die dem in Schritt j2 für das Bit bi aus der zweiten oder der dritten Gruppe ausgewählten Bit zugeordnet ist, über den klassischen Kanal zu übertragen;
- wenn die Vorrichtung den Vorgang jj ausführt, die Vorrichtung dafür ausgelegt ist, bei dem Vorgang:
da die von der anderen Vorrichtung empfangenen Informationen für jedes der Paritätsbits eine Folge ind1, ind2, ..., indn umfassen, wobei indi, i = 1 bis n mit n ≥ 1, eine Indexnummer angibt, die einem Bit aus der zweiten oder der dritten Gruppe zugeordnet wurde, für jedes Paritätsbit: den Wert des Bits bi, das im Speicher der Vorrichtung der Indexnummer indi für i = 1 bis n zugeordnet ist, zu bestimmen und Decodieren des Werts jedes Paritätsbits in Abhängigkeit von der für das Paritätsbit bestimmten Bitfolge b1, b2, ..., bn gemäß einem bestimmten Code;
in Abhängigkeit von den Werten der so decodierten Paritätsbits die Detektion von Fehlern in der ersten Bitgruppe auszuführen, um den geheimen Schlüssel zu definieren.

## Claims

1. Method for quantum secret key distribution between a first and a second telecommunication device (D_ALICE, D_BOB) connected by a first and a second telecommunication device,
said first connection (30) being an optical transmission connection and hereinafter reffered to as quantum channel, said second teletransmission connection hereinafter reffered to as conventional channel (40);
said method comprising the following steps implemented by the first device (D_ALICE):
- generating a random sequence of bits by the first device;
- for each bit considered successively in the generated sequence, encoding said bit at least by one value of a parameter defining a quantum state of a respective light pulse comprising at least one photon, said value of the parameter being defined as a function of at least the value of said bit; a light pulse having said parameter value then being transmitted over the quantum channel and intended for the second device following said encoding;
said method being **characterised in that** it further comprises the following steps implemented by the first device (D_ALICE):
- at least one step from among the steps j and jj below:
- a step j comprising at least:
- one calculation of parity bits as a function of bits of the generated sequence; and
- a transmission, intended for the second device, of information relating to the calculated parity bits;
- a step jj comprising at least:
- a reception of information coming from the second device and relating to parity bits calculated by said second device as a function of the receiving, by the second device, of the light pulses transmitted by the first device; then
- a detection of errors in said sequence of bits as a function of the values of said information relating to the received parity bits;
and **in that** the following steps are implemented by the first device (D_ALICE):
- distributing of at least some bits of the generated sequence into 3 distinct sets of bits, each bit being associated with an index number as a function of its rank within at least said some bits: a first set of bits to define the secret key, a second set of bits equal to 0 and a third set of bits equal to 1; each bit of at least the second and third sets being associated, in a memory of the first device, with its index number;
- if step j is implemented, said step j comprises the following steps:
j0/ the parity bits are calculated as a function of bits of the first set;
j1/ according to a predetermined code, encoding of the value of each parity bit calculated by a continuation of bits b1, b2...bn of length n greater than or equal to 1;
j2/ for each bit bi, i = 1 to n: if and only if bi = 0, selecting one of the bits of the second set and if and only if bi = 1, selecting one of the bits of the third set;
j3/ said transmission of information relating to the calculated parity bits comprises the transmission, over the conventional channel, for each calculated parity bit, of a continuation ind1, ind2...indn, where indi, i=1 to n, indicates the index number associated with said selected bit in the second or third set at step j2 for the bit bi;
- if step jj is implemented, said step jj comprises the following steps:
jj0/ the information received coming from the second device comprising, for each of said parity bits, a continuation ind1, ind2...indn where indi, i = 1 to n with n ≥ 1, indicates the index number associated with a bit in the second or third set, for each parity bit: determining the value of the bit bi associated, in the memory of the first device, with the index number indi for i = 1 to n, and decoding according to a determined code, of the value of each parity bit as a function of the continuation of bits b1, b2...bn determined for said parity bit;
jj1/ said detection of errors is a detection of errors in the first set of bits to define the secret key and is done as a function of said values of parity bits thus decoded.

2. Method for quantum secret key distribution method according to the preceding claim, according to which:
if the value of bi is 0, the transmitted information relating to bi indicates the index number of the selected bit of the second set and if the value of bi is 1, the transmitted information relating to said bit thus indicates the index number of the selected bit of the third set; said selection being done by drawing.

3. Method for quantum secret key distribution according to any one of the preceding claims, according to which:
- the first device (D_ALICE) comprises at least two distinct encoding bases between values of said parameter and the values 0 or 1 of a bit;
- the first device (D_ALICE) randomly selects, for each bit considered in the generated sequence, a base from among the at least two distinct bases, to perform said bit encoding by said value of said light pulse parameter and stores, for each bit of the sequence, an indication of the selected base;
- after the light pulse transmission, transmission by the first device (D_ALICE) to the second device (D_BOB) over the conventional channel of the indication of the base that the first device (D_ALICE) has selected, for each bit of the sequence, and receiving coming from said second device (D_BOB), over the conventional channel, of the indication, for each bit of the sequence, of the base that said second device (D_BOB) has selected to evaluate the value of said bit of the sequence;
- comparing, for each bit of the sequence, base indications stored and received and identifying bits of the sequence for which the base selected by the first device and the second device are identical;
- the first, second and third sets of bits are composed of bits thus identified.

4. Computer program, intended to be stored in the memory of a first device and further comprising a microcomputer, said computer program comprising instructions which, when they are executed on the microcomputer, orchestrate the steps of a method according to any one of the preceding claims.

5. Telecommunication device (D_ALICE) being suitable for being connected to another telecommunication device (D_BOB) by a first and a second telecommunication connection,
said first connection (30) being an optical transmission connection and hereinafter reffered to as quantum channel, said second teletransmission connection hereinafter reffered to as conventional channel (40);
said device (D_ALICE) being suitable for generating a random sequence of bits and for each bit considered successively in the generated sequence, to encode said bit at least by one value of a parameter defining a quantum state of a respective light pulse comprising at least one photon, said value of the parameter being determined as a function of at least the value of said bit; and to transmit, over the quantum channel and intended for the other device, a light pulse having said parameter value;
said device (D_ALICE) being **characterized in that** it is suitable for performing at least one operation from among the operations j and jj below:
- an operation j comprising at least
- a calculation of parity bits as a function of bits of the sequence generated; and
- a transmission, intended for the second device, of information relating to the calculated parity bits;
- an operation jj comprising at least:
- a reception of information coming from the other device and relating to parity bits calculated by said other device as a function of the receiving, by the other device, of the light pulses transmitted by the device; then
- a detection of errors in said sequence of bits as a function of the values of said information relating to the received parity bits;
said device (D_ALICE) being **characterized in that** it is suitable for distributing at least some bits of the generated sequence into 3 distinct sets of bits, each bit being associated with an index number as a function of its rank within at least said some bits: a first set of bits to define a secret key, a second set of bits equal to 0 and a third set of bits equal to 1; each bit of at least the second and third sets being associated, in a memory of the device, with its index number;
- if the device performs the operation j, the device is suitable for, during said operation:
j0/ calculating the parity bits as a function of bits of the first set;
j1/ encoding, according to a predetermined code, the value of each parity bit calculated by a continuation of bits b1, b2...bn of length n greater than or equal to 1;
j2/ for each bit bi, i = 1 to n: if and only if bi = 0, selecting one of the bits of the second set and if and only if bi = 1, selecting one of the bits of the third set;
j3/ to transmit the information relating to the calculated parity bits: transmitting, over the conventional channel, for each calculated parity bit, a continuation ind1, ind2...indn, where indi, i=1 to n, indicates the index number associated with said selected bit in the second or third set at step j2 for the bit bi; and/or
- if the device performs the operation jj, the device is suitable for, during said operation:
jj0/ the information received coming from the other device comprising, for each of said parity bits, a continuation ind1, ind2...indn where indi, i = 1 to n with n ≥ 1, indicates the index number associated with a bit in the second or third set, for each parity bit: determining the value of the bit bi associated, in the memory of the device, with the index number indi for i = 1 to n, and decoding according to a determined code, the value of each parity bit as a function of the continuation of bits b1, b2...bn determined for said parity bit;
jj1/ performing, as a function of said values of the parity bits thus decoded, said detection of errors in the first set of bits to define the secret key.

6. Method for quantum secret key distribution regarding a first and a second telecommunication device (D_ALICE, D_BOB), each connected by a respective first and a second telecommunication device, and connected to one another by a second telecommunication connection,
said first connection being an optical transmission connection and hereinafter reffered to as quantum channel, said second teletransmission connection hereinafter reffered to as conventional channel;
said method comprising the following steps implemented by the second device (D_BOB):
- receiving of a sequence of light pulses over the quantum channel such that for each light pulse of the sequence of pulses received, a measurement of a parameter of the light pulse is taken;
- for each light pulse, estimation of the value of at least one bit encoded by said pulse as a function of said measurement of the parameter; the bits estimated as a function of the light pulses of the sequence defining a sequence of bits;
said method being **characterised in that** it comprises the following steps implemented by the second device (D_BOB):
- at least one step from among the steps j and jj below:
- a step j comprising at least:
- a calculation of parity bits as a function of bits of the sequence generated; and
- a transmission, intended for the first device (D_ALICE), of information relating to the calculated parity bits;
- a step jj comprising at least:
- a reception of information coming from the first device and relating to parity bits calculated by said first device; then
- a detection of errors in said sequence of bits as a function of the information received relating to the parity bits;
and **in that** the following steps are implemented by the second device (D_BOB):
- distributing of at least some bits of the generated sequence into 3 distinct sets of bits, each bit being associated with an index number as a function of its rank within at least said some bits: a first set of bits to define the secret key, a second set of bits equal to 0 and a third set of bits equal to 1; each bit of at least the second and third sets being associated, in a memory of the second device, with its index number;
- if step j is implemented, said step j comprises the following steps:
j0/ the parity bits are calculated as a function of bits of the first set;
j1/ according to a predetermined code, encoding of the value of each parity bit calculated by a continuation of bits b1, b2...bn of length n greater than or equal to 1;
j2/ for each bit bi, i = 1 to n: if and only if bi = 0, selecting one of the bits of the second set and if and only if bi = 1, selecting one of the bits of the third set;
j3/ said transmission of information relating to the calculated parity bits comprises the transmission, over the conventional channel, for each calculated parity bit, of a continuation ind1, ind2...indn, where indi, i=1 to n, indicates the index number associated with said selected bit in the second or third set at step j2 for the bit bi;
- if step jj is implemented, said step jj comprises the following steps:
the information received coming from the first device comprising, for each of said parity bits, a continuation ind1, ind2...indn where indi, i = 1 to n with n ≥ 1, indicates the index number associated with a bit in the second or third set, for each parity bit: determining the value of the bit bi associated, in the memory of the second device, with the index number indi for i = 1 to n, and decoding according to a determined code, of the value of each parity bit as a function of the continuation of bits b1, b2...bn determined for said parity bit;
said detection of errors is a detection of errors in the first set of bits to define the secret key and is done as a function of said values of parity bits thus decoded.

7. Method for quantum secret key distribution according to the preceding claim, according to which: if the value of bi is 0, the transmitted information relating to bi indicates the index number of the selected bit of the second set and if the value of bi is 1, the transmitted information relating to said bit thus indicates the index number of the selected bit of the third set; said selection being done by drawing.

8. Method for quantum secret key distribution according to any one of claims 6, 7, according to which:
- the second device (D_BOB) comprises at least two distinct matching bases between values of the parameter and the values 0 or 1 of an estimated bit, from among several distinct bases, and the second device (D_BOB) randomly selects, for each pulse considered in the sequence of pulses, a base from among the at least two distinct bases, to perform the estimation of the value of at least said bit as a function of the measurement of said parameter and stores, for each bit of the sequence, which base has been selected;
- after the receiving step, the second device (D_BOB), sends to the first device (D_ALICE), over the conventional channel, the indication of the base that the second device (D_BOB) has selected, for each bit of the sequence of bits, such as stored and received from said first device (D_ALICE) over the conventional channel, the indication of the base that said first device (D_ALICE) has selected to encode each bit of the sequence;
- comparing, for each bit of the sequence, base indications stored and received and identifying bits of the sequence for which the base selected by the first device and the second device are identical;
- the first, second and third sets of bits are composed of bits thus identified.

9. Computer program, intended to be stored in the memory of a second device (D_BOB) and further comprising a microcomputer, said computer program comprising instructions which, when they are executed on the microcomputer, implement the steps of a method according to any one of claims 6 to 8.

10. Telecommunication device (D_BOB) suitable for being connected to a first telecommunication connection and for being connected to a second telecommunication connection connecting said device to another telecommunication device (D_ALICE),
said first connection being an optical transmission connection and being hereinafter reffered to as quantum channel, said second teletransmission connectionhereinafter reffered to as conventional channel;
said device (D_BOB) being suitable for receiving a sequence of light pulses over the quantum channel and for each light pulse of the sequence of pulses received, taking a measurement of a parameter of the light pulse;
said device (D_BOB) being suitable for estimating, for each light pulse, the value of at least one bit encoded by said pulse as a function of said measurement of the parameter; the bits estimated as a function of the light pulses of the sequence defining a sequence of bits;
said device (D_BOB) being **characterised in that** it is suitable for performing at least one operation from among the operations j and jj below:
- an operation j comprising at least
- a calculation of parity bits as a function of bits of said sequence; and
- a transmission, intended for the other device (D_ALICE), of information relating to the calculated parity bits;
- an operation jj comprising at least:
- a reception of information coming from the other device and relating to parity bits calculated by said other device; then
- a detection of errors in the sequence of bits as a function of the information received relating to the parity bits;
said device (D_BOB) being **characterized in that** it is suitable for distributing at least some bits of the sequence into 3 distinct sets of bits, each bit being associated with an index number as a function of its rank within at least said some bits: a first set of bits to define a secret key, a second set of bits equal to 0 and a third set of bits equal to 1; each bit of at least the second and third sets being associated, in a memory of the device, with its index number;
- if the device performs the operation j, the device is suitable for, during said operation:
j0/ calculating the parity bits as a function of bits of the first set;
j1/ encoding, according to a predetermined code, the value of each parity bit calculated by a continuation of bits b1, b2...bn of length n greater than or equal to 1;
j2/ for each bit bi, i = 1 to n: if and only if bi = 0, selecting one of the bits of the second set and if and only if bi = 1, selecting one of the bits of the third set;
j3/ to transmit the information relating to the calculated parity bits: transmitting, over the conventional channel, for each calculated parity bit, a continuation ind1, ind2...indn, where indi, i=1 to n, indicates the index number associated with said selected bit in the second or third set at step j2 for the bit bi;
- if the device performs the operation jj, the device is suitable for, during said operation:
the information received coming from the other device comprising, for each of said parity bits, a continuation ind1, ind2...indn where indi, i = 1 to n with n ≥ 1, indicates the index number associated with a bit in the second or third set, for each parity bit: determining the value of the bit bi associated, in the memory of the device, with the index number indi for i = 1 to n, and decoding according to a determined code, the value of each parity bit as a function of the continuation of bits b1, b2...bn determined for said parity bit;
performing, as a function of said values of the parity bits thus decoded, said detection of errors in the first set of bits to define the secret key.
